# EUROPEAN PATENT SPECIFICATION

(11) **EP 3 932 743 B1**
(45) Date of publication and mention of the grant of the patent: **08.11.2023**
(21) Application number: 20763684.6
(22) Date of filing: 03.02.2020
(51) Int. Cl.: B60R 9/06, B60D 1/06

(54) **SUPPORT STRUCTURE FOR A CARRIER FOR MOUNTING ON A TOW BALL OF A VEHICLE AND CONTAINER, SKI RACK AND BIKE RACK THAT CAN BE COUPLED TO SAID STRUCTURE**
TRÄGERSTRUKTUR FÜR EINEN TRÄGER ZUR BEFESTIGUNG AN EINEM KUGELKOPF EINES FAHRZEUGS UND BEHÄLTER, AN DIE BESAGTE STRUKTUR KOPPELBARER SKITRÄGER UND FAHRRADTRÄGER
STRUCTURE SUPPORT POUR PORTE-CHARGE DESTINÉ À ÊTRE MONTÉ SUR UN CROCHET DE REMORQUE DE TYPE BOULE D'UN VÉHICULE, CONTENEUR, PORTE-SKIS ET PORTE-VÉLOS POUVANT ÊTRE COUPLÉS À CETTE STRUCTURE

(30) Priority: 26.02.2019 ES 201930170
(43) Date of publication of application: 05.01.2022
(73) Proprietor: Garai Abrisketa, Eneko, 48970 Basauri (ES)
(72) Inventor: Garai Abrisketa, Eneko, 48970 Basauri (ES)
(74) Representative: Isern Patentes y Marcas S.L.
(86) International application number: PCT/ES2020/070077
(87) International publication number: WO 2020/174105

(56) References cited:
- EP-A1- 2 258 567
- EP-A1- 2 848 473
- EP-A1- 2 848 473
- EP-A1- 2 987 662
- AU-A1- 2009 238 309
- US-A- 4 274 568
- US-A- 5 476 202
- US-A- 5 775 560
- US-A1- 2011 049 208
- US-A1- 2015 375 585
- US-B1- 6 234 372
- US-B1- 6 485 243
- US-B1- 9 333 822

## Description

### TECHNICAL FIELD OF THE INVENTION

The present invention relates to load transport devices in automobiles or the like, particularly related to devices for expanding the loading capacity of said automobiles, with such devices being configured for being coupled to ball tow or hitch elements

### STATE OF THE ART

Automobiles and other transport vehicles for people are normally used for purposes other than transporting people per se, for example, for transporting a different variety of loads. It is often preferred, due to reasons of hygiene or space, for these different loads to be transported outside of the vehicle but connected to same. In response to this need, auxiliary load devices of the type that are towed, supported on the roof or hitched in some way to the automobile, which transport the load in a space that is independent from the interior compartment or boot of the car, have been developed and become popular. Despite the widespread use of these auxiliary load transport devices, they present important limitations with respect to their use.

In relation to auxiliary load devices supported on the roof of an automobile, there are important limitations such as, for example, the maximum weight that can be transported while supported on the roof which, in most cases, cannot exceed 75 kg; therefore, there is no option of increasing the load above said value. Another limitation can be found in the aerodynamic drag against forward movement, which increases the vehicle fuel consumption and can generate annoying noises while driving. In addition to the foregoing, these rooftop load devices usually require a complex fixing to the roof, such that when they are not being used detaching them can be complicated. Another further limitation is that these devices increase the total height of the car, so in some places the entrance of the automobile can be restricted when carrying said device on the roof.

Moreover, towed or towable auxiliary load devices also present important limitations such as, for example, the maximum speed at which the automobile can travel, which cannot be more than 80 km/h; furthermore, the towed device generates inertias in the rear part which can affect the dynamic performance of the vehicle. It also increases fuel consumption due to the friction of the wheels of said trailer against the ground, and it can furthermore generate annoying noises during the trip. Likewise, it should be expected that when it is not in use, the tow device should have a space reserved for storing it due to its dimensions.

Due to the important limitations of the devices mentioned above, auxiliary load devices have been developed, configured for being supported in a cantilevered manner on the tow hitch provided in the automobile, which avoids increasing the height of said vehicle and also the rolling of an additional body.

The most widely used tow hitch is that having a spherical or "ball" head, for which reason the devices coupled to hitches of this type have increased. However, devices of this type currently present limitations such as, for example, the maximum load of the transported device cannot be more than 75 kg, taking into account that some tow ball hitches can withstand vertical loads of up to 200 kg, difficulty in accessing the boot or the rear part of the automobile given the volume of the hitched device. Like with the previous devices, it would be necessary to provide a special location for storage when this auxiliary device is not in use. Furthermore, said auxiliary load device may not be leak-tight, so it is sensitive to the entrance of water or dirt.

An example of such auxiliary load devices has been provided in the European patent application EP2987662A1 which discloses a clamp mechanism mountable to a coupling device having a tow ball supported by a tow ball neck. The clamp mechanism comprises a ball retainer having a ball support surface contactable at least to a first area of the tow ball located opposite to the tow ball neck and at least two clamp members which are distributed about a centre axis of the ball support surface. Each of the clamp members is movably arranged with respect to the ball retainer and has a ball clamping surface contactable at least to a second area of the tow ball located on the side of said tow ball neck. The clamp mechanism further comprises a tensioning member arranged movably along the direction of the centre axis with respect to the ball retainer and interacting with each of the clamp members such that by applying a force to the tensioning member, a clamping force acting between the ball support surface and the ball clamping surfaces to the tow ball is achievable.

Yet another example of an auxiliary load device is the European patent application EP2848473A1 which discloses a load carrier for mounting on a vehicle and having a coupling device, a base part connected with the coupling device and a carrier frame being connected with the base part and movable relative to the base part between an upper transporting and a lower loading position, wherein the coupling device and the base part are connected by a pivoting bearing allowing movement from an untilted position to a tilted position of the base part, the pivoting bearing comprising a blocking mechanism having a blocking element, which is actuatable by an actuating element, the actuating element and the blocking element are disposed and formed so that the actuating element can act upon the blocking element for unblocking the pivoting bearing.

Despite the fact that there are multiple auxiliary devices for transporting load in a vehicle, important limitations can be seen in such devices, especially with respect to the maximum weight that can be transported by said structures, and, therefore, there has been detected a need to provide an auxiliary load support structure that can be coupled to the tow ball hitch of a vehicle which overcomes the deficiencies found in the art, wherein said structure allows the coupling of different elements such as containers or the like to facilitate the transport of different types of load.

### DESCRIPTION

In response to the need found, the present invention provides a support structure for a carrier provided for mounting on a tow ball hitch of a vehicle with the features of claim 1.

In preferred embodiments of the support structure for a carrier, the support base comprises a housing configured for receiving the ball and a shaft portion of the tow ball hitch, fixing means for fixing to the ball configured for securing the support base in a fixed position relative to the ball hitch, and guiding means configured for guiding the unfolding of the frame between the service position and the unfolded position.

In other preferred embodiments of the support structure for a carrier, the frame comprises at least a vertical element that can be coupled to the support base and folded between the service position and the folded position, a lower crossbar coupled at a first end of the vertical element; an upper crossbar coupled at a second end of the vertical element which is opposite the first end; and additional load anchoring means provided in the vertical element.

In other even more preferred embodiments of the support structure for a carrier, the frame comprises at least a first vertical element that can be movably coupled to the support base between the service position and the unfolded position, a second vertical element that can be pivotably coupled to the first vertical element and configured for moving between an extended position and a folded position relative to the first vertical element, wherein the first vertical element and the second vertical element are configured for at least partially fitting together in the folded position, blocking means linked to the first vertical element and the second vertical element and configured for fixing the movement of the second vertical element in the extended position and for fixing the movement of the second vertical element in the folded position, a lower crossbar coupled at one end of the first vertical element, an upper crossbar coupled at one end of the second vertical element which is opposite the end of the first vertical element, and additional load anchoring means provided in the first vertical element.

In other preferred embodiments of the support structure for a carrier, the frame comprises at least one lower anchoring support provided in the lower crossbar and an upper anchoring support provided in the upper crossbar.

In preferred embodiments of the support structure for a carrier, the frame comprises lower auxiliary crossbars that can be coupled to each of the ends of the lower crossbar and oriented orthogonally relative to said lower crossbar, upper auxiliary crossbars that can be coupled to each of the ends of the upper crossbar and oriented orthogonally relative to said upper crossbar, lower anchoring supports provided in the lower auxiliary crossbars; and upper anchoring supports provided in the upper crossbars.

The invention also discloses a container provided for being coupled to the support structure for a carrier as described up until now, the container comprising an essentially box-shaped hollow body, a lower coupling means provided in the hollow body and configured for being releasably coupled to the lower anchoring support of the frame of the support structure, a hitching means provided in the hollow body and configured for being releasably coupled to the upper anchoring support of the frame of the support structure, a hitch actuation means connected with the hitching means and configured for releasing said hitching means from the upper anchoring support; and a coupling provided in the hollow body and configured for releasably coupling a licence plate holder.

In preferred embodiments of the container, the hollow body comprises a front body portion and a rear body portion connected by a hinged joint, with said front body portion and rear body portion being configured for being coupled to one another in a sealed or leak-tight manner; wherein the lower coupling means is provided on a lower face of the front body portion, the hitching means is provided on a front face of the front body portion, the hitch actuation means being provided in the front body portion, the coupling being provided in the rear body portion and configured for releasably coupling the licence plate holder, a reflective plate provided on a rear face of the rear body portion and wheels provided on the lower face of the front body portion.

In other preferred embodiments, the container comprises a cover configured for at least partially covering the container.

Additionally, the invention also comprises a bike rack provided for being coupled to the support structure for a carrier, as described up until now, wherein the bike rack comprises a main telescopic support element that can be coupled to the additional load anchoring means of the frame, configured for pivoting relative to said frame between a service position and a folded position; at least one crossbar element that can be coupled to the main support element, configured for fitting the wheels of a bike; and at least one arm element that can be pivotably coupled to the main support element and configured for coupling the bike frame.

In preferred embodiments, the bike rack comprises at least one lock element provided in the arm element and configured for securing the bike frame to said arm element; a first licence plate holder support that can be coupled to the main support element at an end which is opposite the frame; and a second licence plate holder support that can be coupled to the main support element in a position adjacent to the frame.

Moreover, the invention comprises a ski rack provided for being coupled to the support structure for a carrier as described, said ski rack comprising at least one support structure that can be coupled to the additional load anchoring means of the frame; at least two pivotable supports that can be coupled to the support structure configured for holding skis, snowboards or the like; and blocking means configured for blocking the supports between an extended position and a folded position.

In preferred embodiments, the ski rack comprises at least one clamp element provided in each pivotable support configured for holding skis, snowboards or the like; and a closure element provided in the clamp element configured for keeping said clamp element closed.

Additionally, the invention discloses a storage and transport system provided for mounting on a tow ball hitch of a vehicle, the system comprising a support structure for a carrier as described in the preceding paragraphs, at least one container, with the described features, coupled to the lower anchoring support provided in the lower crossbar and to the upper anchoring support provided in the upper crossbar of the frame of said support structure for a carrier, and a licence plate holder coupled to the container.

In preferred embodiments, the storage and transport system comprises two containers individually coupled respectively to the lower anchoring supports provided in each of the lower auxiliary crossbars of the frame of the support structure for a carrier; and individually coupled respectively to the upper anchoring supports provided in each of the upper auxiliary crossbars of the frame of the support structure for a carrier.

In another embodiment, the invention comprises a second storage and transport system provided for mounting on a tow ball hitch of a vehicle comprising a support structure for a carrier as described in the preceding paragraphs; a bike rack, as defined in the preceding paragraphs, coupled to the frame of the support structure, with said bike rack being oriented towards the back; and a licence plate holder coupled to the first licence plate holder support of the main support element.

In preferred embodiments, this second load storage and transport system comprises a ski rack, as described in the preceding paragraphs, coupled to the frame of the support structure for a carrier.

A second storage and transport system is disclosed in the invention, with this system being provided for mounting on a tow ball hitch of a vehicle comprising a support structure for a carrier as described in the preceding paragraphs and a bike rack coupled to the lower crossbar of the frame of the support structure and to the upper crossbar of the frame of the support structure, wherein said bike rack is oriented towards the back of the vehicle.

In alternative embodiments, this second storage and transport system according to the invention comprises a ski rack coupled to the lower crossbar and to the upper crossbar of the frame of said support structure for a carrier, with said ski rack being oriented towards the front of the vehicle.

In other embodiments, the second storage and transport system comprises at least one container, as is known from above, coupled to the lower anchoring support provided in the lower crossbar and to the upper anchoring support provided in the upper crossbar of the frame of said support structure for a carrier, and/or two containers, having features similar to the first, individually coupled respectively to the lower anchoring supports provided in each of the lower auxiliary crossbars of the frame of the support structure for a carrier; and individually coupled respectively to the upper anchoring supports provided in each of the upper auxiliary crossbars of the frame of the support structure for a carrier.

One of the advantages of the invention relates to the transportable load capacity, which, overall, can be above 75 kg currently approved by manufacturers of carriers that can be coupled to tow ball hitches, even being able to transport a total combined load of 250 kg on the tow ball hitch.

Another advantage to be pointed out is the capacity of the system to be versatile and easy to store when it is not in use, since the containers can be readily detached from the frame of the support structure, said containers acting as transportable suitcases, so when the container is uncoupled, it is taken together with the load to the final destination; furthermore, the support structure is foldable, whereby it can be folded over itself, uncoupled from the hitch and stored inside the automobile.

Another advantage of the invention is that it allows up to four independent containers to be coupled due to the arrangement of the anchoring supports on the auxiliary crossbars and the latter in turn on the upper and lower crossbars of the frame of the support structure.

In addition to the foregoing, the containers are leak-tight in such a way that the load transported therein is protected from water, dust and dirt in general.

Another advantage relates to the configuration of the support structure which allows other special auxiliary load devices for transporting objects such as a bike rack or ski rack to be coupled to said support structure, and it is possible to configure transport and storage systems that are flexible with respect to the type of objects which they can transport that are unknown on the market, which can be coupled on a vehicle tow ball hitch of the type existing on the market, with the competitive advantage that all the elements making up the system can be readily detached and can be kept in any boot.

Another advantage is that the bike rack, given the telescopic configuration of the main telescopic support element coupled to the frame of the support structure, can be adapted based on the number of bikes to be transported, and it can be adjusted for transporting from one up to four bikes, in addition to being adjustable to the maximum transportable length of each vehicle.

### BRIEF DESCRIPTION OF THE FIGURES

The foregoing and other advantages and features will be more fully understood from the following detailed description of exemplary embodiments with reference to the accompanying drawings, which should be considered by way of illustration and not limitation, wherein:
- Fig. 1 is a perspective view of the support structure for a carrier in which the main elements making up same can be seen.
- Fig. 2A is a plan view of a portion of a tow ball hitch as is known in the state of the art.
- Figs. 2B and 2C are perspective views of the support base of the support structure for a carrier coupled to the tow ball hitch. Particularly, Fig. 2C shows a partially exploded view in which the first compression element and the second compression element are extracted from the support base.
- Fig. 3 is a view of the vertical elements making up the frame connected to the base support of the support structure.
- Figs. 4A, 4B, 4C and 4D are different perspective views of the container of the invention that can be coupled to the support structure. Figure 4D is a detail view of the hitching actuation means.
- Figs. 4E and 4F are perspective views of the outer cover provided for additional protection of the container.
- Fig. 5A is a perspective view of a bike rack that can be coupled to the support structure for a carrier and to which at the same time a licence plate holder can be coupled.
- Fig. 5B is a partially exploded perspective view in which the anchoring base of the bike rack can be seen in better detail.
- Fig. 5C is a partially exploded view of the main support element of the bike rack.
- Fig. 6 is a perspective view of the ski rack coupled to the frame of the support structure for a carrier.
- Fig. 7 is a view of an embodiment of a storage and transport system provided for being coupled to a vehicle tow ball hitch.
- Fig. 8 is a perspective view of the licence plate holder.
- Fig. 9 is a view of a second embodiment of a storage and transport system provided for being coupled to a vehicle tow ball hitch.
- Fig. 10 is a view of the second embodiment of a storage and transport system provided for being coupled to a vehicle tow ball hitch in which the bike rack and the ski rack are shown in the folded position.
- Fig. 11 is a view of the second embodiment of a storage and transport system provided for being coupled to a vehicle tow ball hitch in which a bike is shown coupled to the bike rack, containers are shown coupled to the frame and the ski rack is shown in the unfolded position.

### DETAILED DESCRIPTION OF AN EXEMPLARY EMBODIMENT

In the following detailed description, numerous specific details are set forth in the form of examples to provide a thorough understanding of the relevant teachings. However, it will be apparent to those skilled in the art that the present teachings can be implemented without such details.

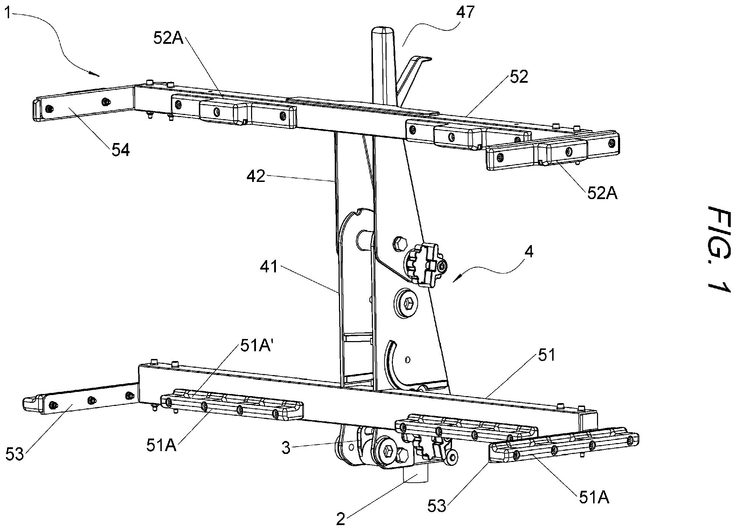

As observed in Figure 1, the present invention discloses 1 a support structure (1) for a carrier provided for mounting on a tow ball hitch (2) of a vehicle for which it comprises a support base (3) that can be coupled and fixed to said tow ball hitch (2).

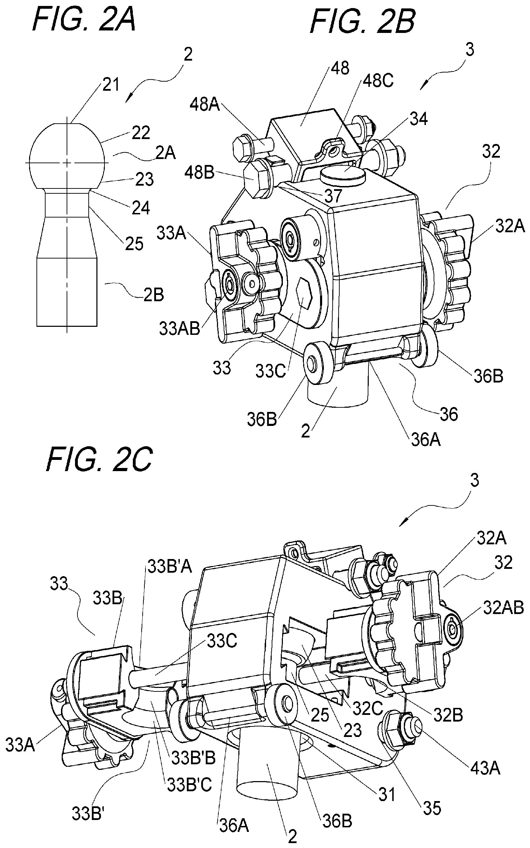

The support base (3), which is preferably a single body obtained from a high-strength steel capable of withstanding the loading stresses to which the support base (3) will be subjected during use can be observed in greater detail in Figures 2B and 2C. Fixing means (30) in charge of securing or fixing the support base (3) in a stable position relative to the tow ball hitch (2) are provided in this body, such that once the support base (3) is held to the tow ball hitch (2), the support structure (1) for a carrier remains fixed in its position regardless of the natural movements of the vehicle.

Tow ball hitches such as the one referred to in the present invention are widely known. To help understand the invention and how the fixing means (30) are coupled to said tow hitch, Figure 2A shows a portion of the ball hitch (2) where it is shown how the latter can be divided into different regions on which pressure can be applied for the correct fixing of the support base (3). The tow ball hitch thereby has a ball portion or spherical portion (2A) and a shaft portion (2B), wherein the spherical portion comprises an upper planar region (21), an upper semi-spherical portion (22), a lower semi-spherical portion (23), a transition portion (24) and a shaft neck (25).

Moreover, as can be observed in Figures 2B and 2C, the fixing means (30) comprise a cavity (31) defined in the body and configured for fully receiving at least part of the ball portion (2A) and loosely receiving a shaft portion (2B) of the tow ball hitch (2). This cavity (31) is defined as a blind hole in the body of the support base (3) where the bottom of said blind hole is configured as a semi-sphere provided for fully receiving the upper semi-spherical portion (22), tightly enveloping same.

The fixing means (30) also comprise a first compression element (32) and a second compression element (33) that can be coupled to one another and can be slidably coupled to the support base (3), being configured for holding the lower semi-spherical portion (23) and a shaft portion neck (25) of the tow ball hitch (2). As can be seen in greater detail in Figure 2C, the first compression element (32) and the second compression element (33) are preferably identical structurally speaking; therefore, to simplify the description, reference will be made to only one of them, understanding that the reference numbers are the same for the other compression element, mutatis mutandis.

The second compression element (33) comprises a tightening second knob element (33A) operatively connected and configured to rotate relative to a second holding body (33B) which can slidably be connected to the body of the support base (3) and configured for contacting part of the spherical portion (2A) of the tow ball hitch (2). As can be observed in Figure 2C, in the preferred embodiment the slidable connection between the second holding body (33B) and the body of the support base (3) is a tongue-and-groove dovetail connection, wherein the male tongue portion is provided in the second holding body (33B), while the female groove is provided in the body of the support base (3).

Moreover, and as stated above, the second holding body (33B) is configured for contacting at least part of spherical portion (2A) of the tow hitch (2). For such purpose, the second holding body (33B) comprises a recess (33B') configured for housing at least part of the spherical portion (2A) and of the shaft portion (2B) of the tow ball hitch (2), such that when the first compression element (32B) and the second compression element (33B) are coupled to one another, as will be described below, they envelop and compress part of the spherical portion (2A) and of the shaft portion (2B). To achieve better compression when coupling the support base (3) to the tow hitch (2), the recess (33B') comprises a semi-spherical envelopment (33B'A) configured for contacting part of the lower semi-spherical portion (23), a semi-cylindrical envelopment (33B'B) configured for contacting part of the shaft neck (25), and a semi-conical envelopment (33B'C) which can be provided for contacting portions adjacent to the shaft portion neck (25).

A second bolt (33C) that can be coupled to the second compression element (33) by known methods extends in an essentially orthogonal manner from the second holding body (33B), entering the first holding body (32B), wherein the first knob element (32A) is configured for being threadably coupled to said second bolt (33C). Similarly, a first bolt (32C) extends in an essentially orthogonal manner from the first holding body (32B), entering the second holding body (33B) for the second knob element (33A) to be threadably coupled to said first bolt (32C).

When the tow ball hitch (2) is housed in the cavity (31), abutting against the semi-sphere provided at the bottom of the blind hole defining said cavity (31), the holding bodies (32B) (33C) are coupled to the body of the support base (3) and the knob elements (32A) (33A) are threaded on their bolts (33C) (32C) respectively, the support base (2) is firmly coupled to the tow hitch (2). Accordingly, the support structure (1) for a carrier is coupled the tow ball hitch (2).

By applying a higher tightening torque of knob elements (32A) (33A) on the bolts (33C) (32C), the shaft portion (2B) will apply greater compression on the spherical portion (2A), which will increase the hold of the support base (3) on the tow ball hitch (2); however, to assure a better hold which allows loads above 75 kg up to 250 kg to be transported with tow hitches of this type, the holding means (30) comprise a retention element (34) that can be coupled to the body of the support base (3) which extends essentially parallel in the axial direction of the shaft of said hitch element (2) and is configured for contacting the upper planar region (21) of the spherical portion (2A) to maximise compression and therefore the hold of the support base (3) with the tow ball hitch (2).

In preferred embodiments, the retention element (34) is a threaded bolt which is screwed into a hole provided in the body of the support base (3) such that it can apply compression on the upper planar region (21) as the tightening torque in said retention element (34) increases. Vertical compression on the spherical portion (2A) applied with this retention element (34) assures the suitable operation of the fixing means (30) in those cases in which the spherical portion (2A) has smaller dimensions and, therefore, allowance with the cavity (31) is generated.

The torque on this retention element (34) can be applied through an element similar to the knob elements (32A) (33A), and under more extreme stresses, it can be done through a suitable means such as a hex key, screwdriver or the like, according to the type of retention element (34) selected.

It should be pointed out that the configuration of the fixing means (30) makes it possible to compress or hold more than 80% of the upper semi-spherical portion (22), to compress more than 95% of the upper semi-spherical portion (22) and lower semi-spherical portion (23), to compress more than 85% of the shaft neck (25), to compress at least 85% of the lower semi-spherical portion (23), and if there is any unlikely tolerance, the fixing means (30) comprise shear bolts (not shown) screwed into the body of the support base and configured for assuring the fixing in position of the first compression element (32) and of the second compression element (33) against possible vibrations. This configuration of the fixing means (30) makes it possible for the support structure (2), when fixed in the tow ball hitch (2), to be capable of withstanding 250 kg of effective load, being fixed in said hitch without allowing any type of vibration and any inclination due to sliding of the support structure (3) on the hitch.

Moreover, the knob elements (32A) (33A) have a suitable ergonomic shape which allows the user to exert the suitable tightening torque on the bolts (33C) (32C) to compress the holding bodies (33B) (32B) and thus fix the support base (3) to the tow ball hitch (2).

In addition to the foregoing, and as observed in Figures 2B and 2C, the knob elements (32A) (33A) comprise security elements (32AB) (33AB) configured for preventing the knob elements (32A) (33A) from being extracted by third parties without authorisation. In the embodiment shown in Figures 2B and 2C, the security elements (32AB) (33AB) are configured as locks or the like, however, the person skilled in the art will recognise that similar security elements which prevent unauthorised third parties from extracting the knob elements (32A) (33A) are within the scope of the present invention.

In Figures 2B and 2C, it can also be observed that the support base (2) comprises rolling means (36) provided on the body of the support base (3) configured for, as will be described in detail below, facilitating the transport of elements which can be coupled to said support base (3) when the latter is uncoupled from the tow ball hitch (2). In the embodiment shown, the rolling means (36) are in the form of an axle (36A) that can be coupled to protrusions provided in a lower corner of the body of the support base, wherein at each of the ends of the axle (36A) there is a wheel (36B).

Given that the support base (3), as stated above, has been configured to withstand a maximum load of up to 250 kg maintaining its correct position relative to the tow ball hitch (2), said support base (3) must be manufactured from a material with good mechanical properties which allows the stresses which may be exerted thereon to be withstood. In a preferred embodiment, the support base is manufactured from a high-strength steel, such as Strenx^{™} 900, which is a steel for which the stress required to cause plastic deformation is at least 900 MPa, whereby it can suitably withstand the stresses to which the support base (3) will be subjected when it is in operation. Other materials having similar mechanical characteristics can be admissible for preparing the support base (3), therefore Strenx^{™} 900 steel should not be interpreted as being limiting.

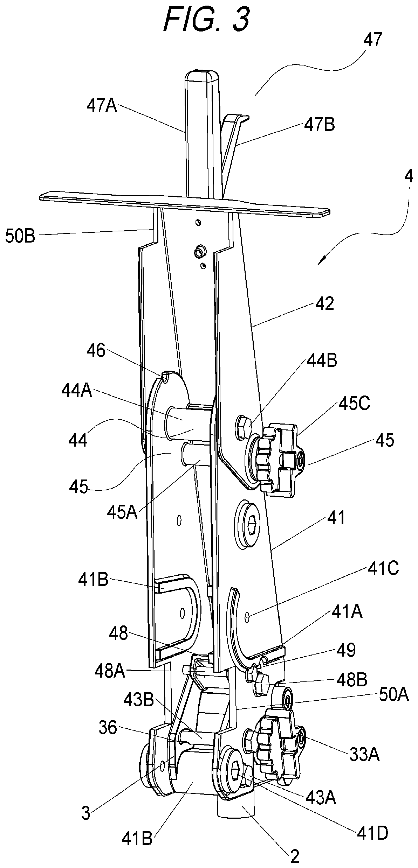

Moreover, and as observed in Figures 1 and 3, the support base (3) is configured for coupling a frame (4), the latter being unfolded from a service position to an unfolded position and vice versa.

The frame (4) comprises a first vertical element (41) that can be movably coupled relative to the support base (3) from the service position to the unfolded position. As observed in Figures 2B, 2C and 3, the first vertical element (41) is slidably adjusted and coupled to said support base (3) by means of a pivot element (43A) pivotably connecting said first vertical element (41) to said support base (3). In the embodiment shown in Figure 3, the pivot element (43A) is a bolt going through the first vertical element (41) and said support base (3) through holes (41A) provided in said first vertical element (41) and holes (35) provided in the body of the support base (3). The manner in which this bolt is secured is such that it allows the pivoting movement of the first vertical element (41) relative to the support base (3) but prevents it from being able to accidentally come loose.

Similarly, a coupling and guiding element (43B) is provided for connecting the first vertical element (41) to guiding means (36) provided in the body of the support base (3) and configured for guiding and/or limiting the pivoting movement of the first vertical element (41) relative to the support base (3). The first vertical element (41) can thereby be moved between a service position and an unfolded position, which corresponds with the unfolded positions of the frame (4). In the embodiment shown in Figure 3, the coupling and guiding element (43B) is a bolt which is fixed and goes through the first vertical element (41) and slides in the guiding means (36) when the latter are configured as a groove or elongated hole in the body of the support base (3). The length of this groove defines the maximum movement of the first vertical element (41) from the service position to the unfolded position and vice versa.

Moreover, the frame (4) comprises a second vertical element (42) that can be pivotably coupled to the first vertical element (41) and configured for moving between an extended position, in which it is essentially parallel to said first vertical element (41), and a folded position relative to the first vertical element (41), wherein the first vertical element (41) and the second vertical element (42) are configured for at least partially fitting together in the folded position.

As can be seen in Figure 3, the pivotable coupling between the first vertical element (41) and the second vertical element (42) is performed through a pivoting attachment (44), and the folding movement between the extended position and the folded position is regulated by blocking means (45) which are linked to the first vertical element (41) and the second vertical element (42) configured for fixing the movement of the second vertical element (42) in the extended position and in the folded position.

In the embodiment shown in Figure 3, the pivoting attachment (44) is shown as a bushing (44A) provided in the first vertical element (41), or a hole provided in said vertical element (41), and which a bolt (44B) goes through, and which bolt in turn goes through the second vertical member (42) through holes (not shown) provided therein. The manner in which this bolt (44B) is secured is such that it allows the pivoting movement of the second vertical element (42) relative to the first vertical element (41) but prevents it from being able to accidentally come loose.

Likewise, the blocking means (45) are shown in said Figure 3 as a bushing (45A) provided in the first vertical element (41), or a hole provided in said first vertical element (41), and which a bolt (45B) goes through, and which bolt in turn goes through the second vertical member (42) through holes (not shown) provided therein, this bolt (45B) being crowned at one or both ends by tightening knobs (45C), which fix the second vertical element (42) in the extended position. For fixing the second vertical element (42) in the folded position, the blocking means (45) comprise a retention element which is configured, as seen in Figure 3, by a groove (46), or hole, in which the bolt (45B) is fitted in the folded position.

In Figure 3, it can be seen that the frame (4) comprises actuation means (47) configured to enable said frame (4) to be unfolded from the service position to the unfolded position. These actuation means (47) are comprised of a fixed element (47A) that can be coupled to the second vertical element (42), an actuation lever (47B) that can be coupled to said fixed element (47A) and pivotable relative to the latter, a blocking element (48) that can be connected to the support base (3), movable relative to said support base (3) and connected to the actuation lever (47B) through a suitable means such as a flexible cable, chain or the like (not shown).

Referring again to Figures 2B and 2C, the blocking element (48) can be observed in greater detail, which element is pivotably coupled to the first vertical element (41) through a pivoting element (48A), which in the mentioned figures is a bolt going through the first vertical pivoting element (41) through holes (not numbered) provided in said first vertical element (41) and going through the blocking element (48) likewise through holes provided (not numbered) in this blocking element (48). Similarly, there has been provided in the blocking element (48) a latch element (48B) configured for being releasably blocked in the support base (3), for which purpose said support base (3) comprises a cavity (37) configured for the releasable blocking of the latch element (48B). Likewise, the first vertical element (41) comprises a groove (49) through which the latch element (48B) can be moved when the blocking element (48) pivots relative to the pivoting element (48A), limiting this movement. In the embodiment shown in Figures 2A, 2B and 3, the latch element (48B) is a bolt.

The blocking element (48) comprises holding means (48C) configured for coupling the opposite end of the flexible cable, chain or the like (not shown), which in turn is connected to the actuation lever (47B).

To go from the service position to the unfolded position, a user must actuate the actuation lever (47B) towards the fixed element (47A), which will cause the flexible cable to encounter the blocking element (48) extracting the latch element (48B) of the cavity (37), whereby the coupling and guiding element (43B) coupled to the first vertical element (41) is enabled to slide in the guiding means (36) provided in the base support (3), wherein at the end of the sliding path, the first vertical element (41), and therefore the frame (4), will be in the unfolded position. To return to the service position, simply exerting the opposite action will be enough for the latch element (48B) to be fitted in the cavity (37) again.

In Figures 1 and 3, it can be observed that the frame (4) has additional load anchoring means (40) provided in the first vertical element (41) and configured, as the name indicates, for coupling to the frame (4) devices which allow an additional load to be transported. As will later be seen, these additional load anchoring means (40) are provided for coupling a bike rack (100) and/or coupling a ski rack (200), and these additional load anchoring means (40) will likewise be described in greater detail below.

As observed in Figure 1, the frame (4) also comprises a lower crossbar (51) coupled at one end of the first vertical element (41), wherein to achieve this coupling, and as shown in Figure 3, the first vertical element (41) comprises connection means (50A) to which the lower crossbar (51) is coupled or connected. As seen in Figure 3, the connection means (50A) can be formed as a cavity or housing in which the lower crossbar (51) is coupled preferably by means of permanent attachment techniques such as welding or the like. The frame (4) also comprises an upper crossbar (52) coupled at one end of the second vertical element (52) which is opposite the end of the first vertical element (41), wherein to provide such coupling, there are arranged at said end of the second vertical element (42) connection means (50B) to which the upper crossbar (52) is coupled or connected. As seen in Figure 3, the connection means (50B) can be formed as a cavity or housing in which the upper crossbar (52) is coupled preferably by means of permanent attachment techniques such as welding or the like.

In addition to the foregoing, the frame (4) comprises in the lower crossbar (51) at least one lower anchoring support (51A) and at least one upper anchoring support (52) provided in the upper crossbar (52). In the embodiment shown in Figure 1, there are provided in the lower crossbar (51) two lower anchoring supports (51A) spaced from one another along said lower crossbar (51), and there are provided in the upper crossbar (52) two upper anchoring supports (52A) spaced from one another along said upper crossbar (52).

These lower anchoring support (51A) and upper anchoring support (52A) are such that they can each be coupled to their respective crossbars by known fixing means such as bolts, rivets or the like. The lower anchoring support (51A) and upper anchoring support (52A) will be described in greater detail in later paragraphs.

It can also be observed in Figure 1 that the frame (4) of the support structure (1) comprises lower auxiliary crossbars (53) that can be coupled to each of the ends of the lower crossbar (51) and oriented orthogonally relative to said lower crossbar (51), and upper auxiliary crossbars (54) that can be coupled to each of the ends of the upper crossbar (52) and oriented orthogonally relative to said upper crossbar (52). These lower auxiliary crossbar (53) and upper auxiliary crossbar (54) can be coupled to each of the lower crossbar (51) and the upper crossbar (52) by means of known attachment elements. In the embodiment shown in Figure 1, the lower crossbar (51) and upper crossbar (52) are tubular elements, wherein a connection portion provided in each of the lower auxiliary crossbar (53) and upper auxiliary crossbar (54) is configured for fitting in these tubular elements and being secured by means of bolts or the like, coupling the lower auxiliary crossbar (53) and upper auxiliary crossbar (54) to their respective lower crossbar (51) and upper crossbar (52).

The lower auxiliary crossbars (53) are provided with lower anchoring supports (51A) coupled to each of said lower auxiliary crossbars (53) by means of known fixing elements such as bolts or the like. Similarly, the upper auxiliary crossbars (54) are provided with upper anchoring supports (51A) coupled to each of said upper auxiliary crossbars (54) by means of known fixing elements such as bolts or the like.

In embodiments not shown, there can be arranged in the frame (4), instead of two vertical elements, a first vertical element (41) and a second vertical element (42), a single vertical element which can be coupled to the support base (3) in the same manner as the first vertical element (41) with the respective unfolded functionality resulting from this coupling, as well as be provided with the actuation means (47) and the lower crossbar (51) and the upper crossbar (52) coupled to opposite ends of said single vertical element.

In addition to the foregoing, the person skilled in the art will observe that the frame (4) can and must be made with structurally resistant materials in order to safely withstand the loads carried therein. Examples of these materials applicable to the frame (4) are structural steels, non-ferrous alloys, such as aluminium alloys or the like, or combinations of such materials; such that the first vertical element (41) and second vertical element (42) can be manufactured from a 6061 aluminium alloy, and the lower crossbar (51), upper crossbar (52) and auxiliary crossbars (53) (54) can be manufactured from a suitable resistant steel. However, this should not be considered as limiting, since any material suitable for the frame (4) capable of withstanding transport loads is within the scope of the invention.

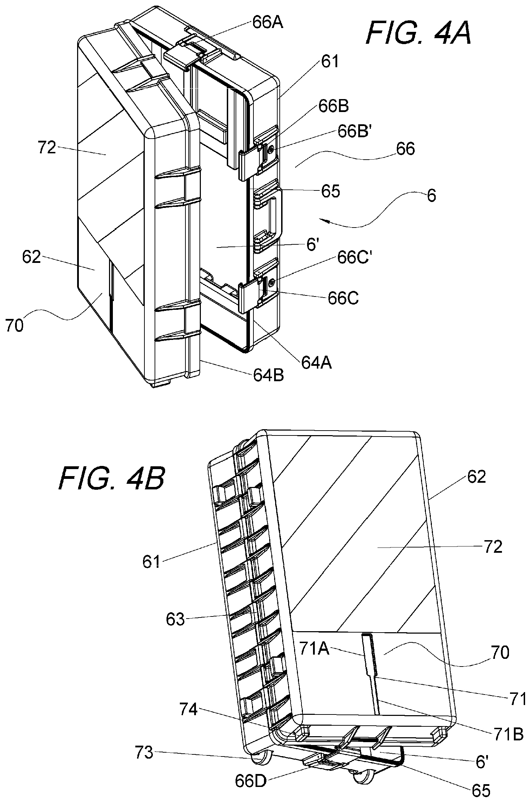

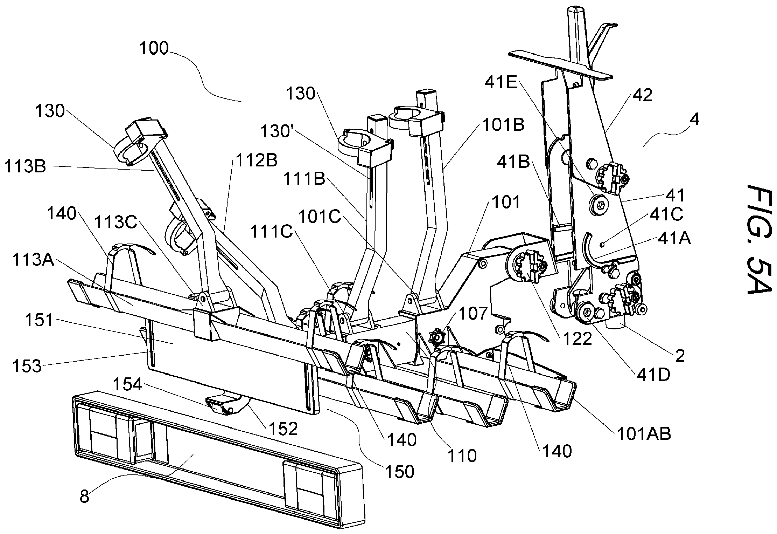

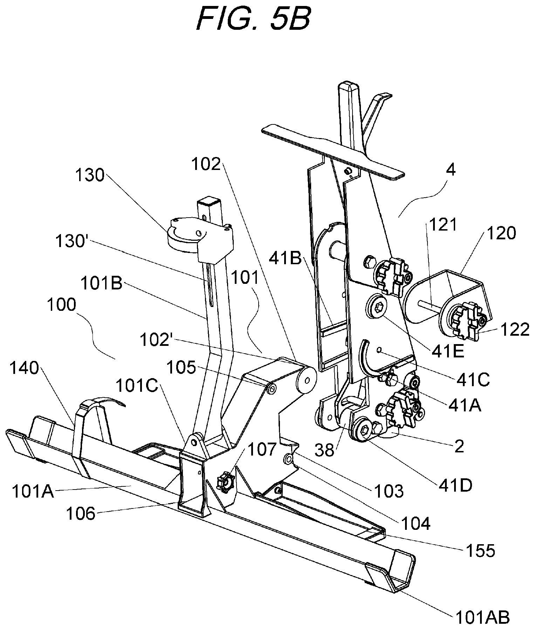

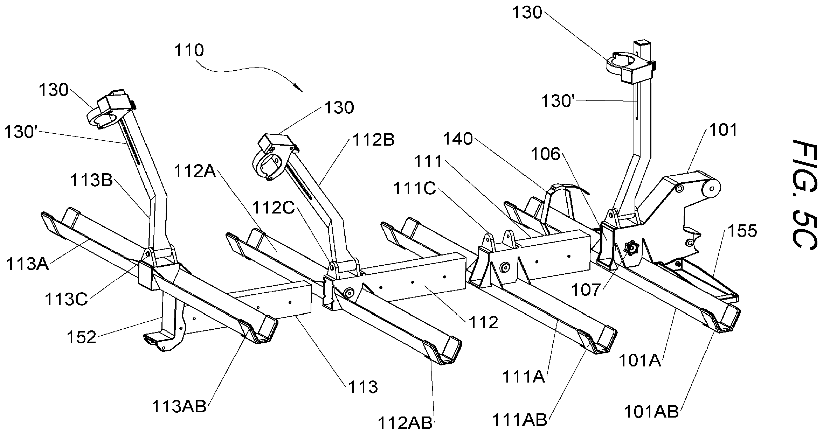

Moreover, as shown Figures 4A, 4B and 5, the invention also provides a container (6) provided for being coupled to the support structure (1) as described up to this point.

In reference to Figures 4A and 4B, the container (6) is an essentially box- or prismatic-shaped hollow body (6'), wherein this hollow body (6') comprises a front body portion (61) and a rear body portion (62) connected by a hinged joint (63), with said front body portion (61) and rear body portion (62) being configured for being coupled to one another in a sealed or leak-tight manner.

In the embodiment shown in Figure 4B, the hinged joint (63) is a piano hinge, extending along the entire length of the side of the front body portion (61) and rear body portion (62), forming a resistant hinge joint, held at a plurality of points, causing the pressure on the front body portion (61) and rear body portion (62) to be uniform when coupled and closed in a leak-tight manner.

For assuring the sealed or leak-tight coupling of the front body portion (61) and rear body portion (62), there has been provided a connection portion (64A) in the front body portion (61) and a connection portion (64B) in the rear body portion (62), wherein said connection portions (64A) (64B) extend along the perimeter on the edges of the front body portion (61) and rear body portion (62) provided for contacting when closing the container (6). There is preferably provided in the connection portion (64A) a sealing element (65) which extends along the entire connection portion (64A) and is configured for contacting the connection portion (64B) of the rear body portion. This elastic element (65) is configured for forming a sealed or leak-tight closure by pressure when the front body portion (61) and the rear body portion (62) are coupled, fitted and kept closed, pressed together by closing means (66) configured for exerting pressure on the connection portion (64A) and on the connection portion (64B). This pressure at least partially compresses the sealing element (65), adjusting it in the connection portion (64A) and in the connection portion (64B) creating the leak-tight or sealed gasket which prevents dust, water or dirt from entering.

In preferred embodiments, the sealing element (65) can be manufactured from materials such as rubber polymers, silicone, rubber such as EPMD, or the like, without being limited to any of these in particular, provided that said material of the sealing element (65) allows the sealed or leak-tight closure by pressure when the front body portion (61) and the rear body portion (62) are coupled, fitted and kept closed, pressed together by closing means (66).

In the embodiment shown in Figures 4A and 4B, the closing means (66) comprise four compression closure elements, wherein a first compression closure element (66A) is located in an upper part of the body (6'), two compression closure elements, that is the second compression closure element (66B) and third compression closure element (66C), located in a lateral part of the body (6') which is opposite the hinged joint (63) spaced from one another on said lateral part, and a fourth compression closure element (66D) provided in a lower part of the body (6') of the container (6). Each of these closure elements (66A) (66B) (66C) (66D) comprises a hitching portion and an anchoring portion provided in each of the front body portion (61) and rear body portion (62) for closing the container (6), wherein for closing said container (6) it has been provided that it will be done in two steps, a first hitching step and another compression closure step. The latter step is performed with a lever of the hitching portion, thereby facilitating compression.

As an anti-opening mechanism, there has been provided in each of the second compression closure element (66B) and third compression closure element (66C) a key-actuated lock (66B') (66C') to prevent the opening by unauthorised third parties.

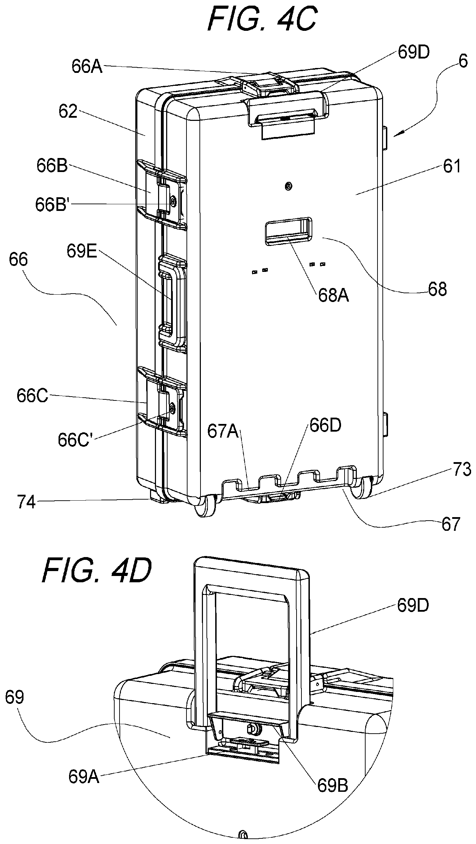

Moreover, and as observed in Figure 4C, the container (6) comprises a lower coupling means (67) provided in the hollow body (6') and configured for being releasably coupled to the lower anchoring support (51) of the frame (4) of the support structure (1). This lower coupling means (67) is preferably provided on a lower face of the front body portion (61). In the embodiment shown in Figure 4C, this lower coupling means (67) is shown as a plurality of protrusions (67A) which are configured for fitting in cavities (51 A') of the lower anchoring support (51A), as observed in Figure 1.

The container (6) also comprises a hitching means (68) provided in the hollow body (6') and configured for being releasably coupled to the upper anchoring support (52A) of the frame (4) of the support structure (1). The hitching means (68) is provided on a front face of the front body portion (61) and, in the embodiment shown in Figure 4C, it has been provided as a retractable element (68A) provided for being actuated or retracted by hitching actuation means (69). This retractable element (68A) is configured for being coupled to a housing or groove (52A') provided in the upper anchoring element (52A), wherein when said retractable element (68A) is coupled in the groove (52A'), it will always be fitted therein unless the hitching actuation means (69) are actuated.

These hitching actuation means (69) are operatively connected to the retractable element and as seen in detail in Figure 4D, they can be in the form of a push button element (69A), which when actuated causes the retraction of the retractable element (68A), which in turn is uncoupled from the groove (52A'), releasing the container (6) from the support structure (1) when the former is coupled to the latter.

As likewise observed in Figure 4D, the hitching actuation means (69) are protected by a cover (69B) which is retractable by known means and configured for preventing the actuation means from being tampered with, as well as for preventing dust, water and dirt from entering. Furthermore, there has been provided as an anti-opening mechanism of the cover (69B) a key-actuated lock (69B') for the purpose of preventing unauthorised third parties from being able to manipulate the cover (69B) and the hitching actuation means (69) to release the container (6).

Not one material in particular is specified for the container (6) given that it can be manufactured with suitable polymer materials such as, for example, polypropylene, which is normally used to manufacture suitcases for travelling, or alloys of lightweight and resistant materials, such as aluminium alloys, titanium alloys or the like.

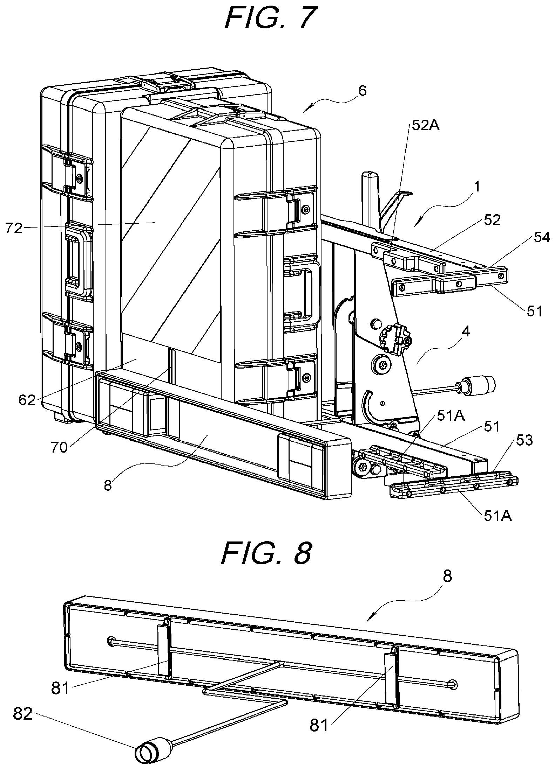

Returning to Figures 4A and 4B, it is observed that the container (6) comprises an outer coupling (70) provided in the hollow body (6') and configured for releasably coupling a licence plate holder (8), as observed in Figure 7, to said outer coupling (70), with the latter preferably being provided in the rear body portion (62). As observed in Figure 4B the outer coupling is provided as a dovetail groove (71) with an access portion (71A) and a coupling portion (71B).

As can be observed in Figure (8), the licence plate holder (8) comprises coupling elements (81) configured for coupling said licence plate holder (8) to the container (6). To correspond with the dovetail groove (71) of the container (6), the coupling elements (81) are at least one dovetail-shaped protrusion which fits in the coupling portion (71B) of the container (6)

In addition to the foregoing, the licence plate holder (8) includes, by law, rear lights with the following functions: licence plate light, brake light, parking light, retroreflector, back-up light, turn signal indicator and fog light. A male connector (82) is provided in the licence plate holder (8) for taking the electrical connection to the lights.

Returning to Figures 4A and 4B, it can be observed that the container (6) comprises a reflective plate (72) that can be coupled on a rear face of the rear body portion (62). This reflective plate (72) will be of the type approved by means of National Approval V-20.124: According to Royal Decree 2822/1998, it can be manufactured from a suitable polymer, such as ABS, and is configured for being coupled to the rear face of the rear body portion (62) of the container (6) and can therefore be part of same.

The container (6) is also provided with wheels (73) comprised on the lower face of the front body portion (61) to help the user move the container (6). Furthermore, the container (6) comprises supports (74) provided on the lower face of the front body portion (61) to make, together with the wheels (73), the container (6) self-supporting.

As observed in Figures 4A to 4D, the container (6) comprises at least one main handle (69D) provided in the front body portion (61) and at least one side handle (69E) preferably provided in a side face of the front body portion (61). The main handle (69D) is configured as a retractable telescopic handle, as can be seen in Figure 4D, while the side handle (69E) is retractable by pivoting. Handles of this type are known in the field of the art.

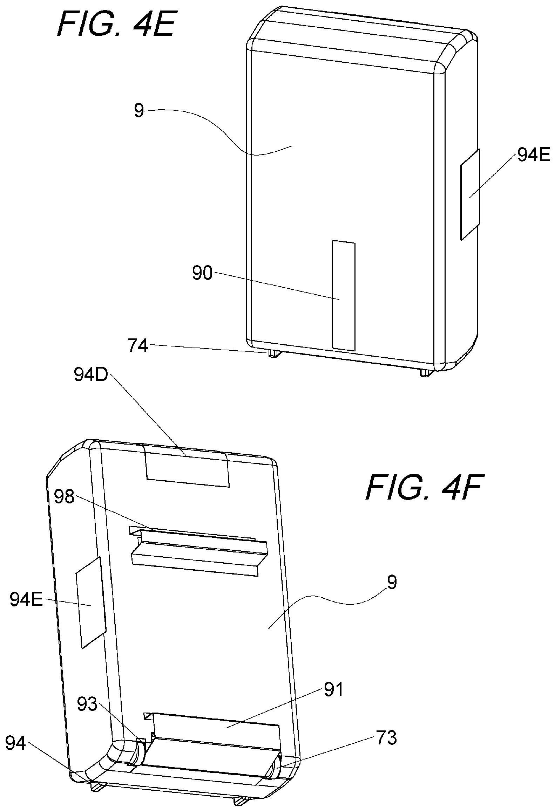

Moreover, and to increase the protection of the container (6) against weather variables, the invention includes an outer cover (9) configured for at least partially covering the container (6), as observed in Figures 4E and 4F. This outer cover (9) envelops the container (6) for the purpose of providing additional protection against impacts, scratches, moisture, liquids, dirt, to avoid splashes, etc.

This outer cover (9) comprises access openings that can each be resealed by a cover element comprising a strip of self-adhesive tape. Thus, there is a side opening/cover element (94E) for allowing the side handle (69E) to be used, an upper opening/cover element (94D) for allowing the main handle (69D) to be accessed and extended, a rear opening/cover element (90) for accessing an outer coupling (70), a lower front opening/cover element (91) for allowing the lower coupling means (67), a front opening/cover element (98) for allowing the coupling of the hitching means (68) relative to the upper anchoring support (52A). In this opening/cover element configuration, all the openings have the respective cover element which is held at one end and fixed at the other by means of self-adhesive tape.

Furthermore, the outer cover (9) has openings (93) for the wheels (73) and openings (94) for the lower supports (74).

The outer cover (9) comprises a waterproof material, known in the state of the art, and furthermore transparent material for allowing visibility of the reflective plate (72), and comprises arrises having a band of nylon fabric provided for coinciding with the arrises of the body (6') of the container (6). The placement of this outer cover (9) is simple, and said cover is adapted to the size of the container (6).

Moreover, and as observed in Figures 5A to 5C, the invention comprises a bike rack (100) configured for being coupled to the support structure (1) for a carrier, such that, in addition to the container or containers (7) that can be coupled to said support structure (1), it is possible carry another type of load, such as bikes, skis or the like, providing a multifunctional quality to the invention since, as will be seen below, it is also possible to couple a ski rack (200), thus forming a storage and transport system which allows different load classes to be transported depending on the user's needs.

The bike rack (100) comprises an anchoring base (101) that can be coupled to the additional load anchoring means (40) of the frame (4) and to the support base (3). As observed in greater detail in Figure 5B, the anchoring base (101) comprises a first coupling end (102) and a second coupling end (103) provided for being coupled to the first vertical element (41) of the frame. Particularly, the first coupling end (102) is provided for being fitted on the first vertical element (41), being guided in this process by inner guide elements (41B) provided in the inner part of the first vertical element (41) and fixed in their position by a support plate (120) which partially envelops the first vertical element (41) located in the holding position by outer guide elements (41A) provided in the outer part of the first vertical element (41), and by a fastening element (121) which simultaneously holds the first coupling end (102), the support plate (120) and the first vertical element (41), the latter going through a hole (41C) provided therein. In the embodiment shown in Figure (5B), the fastening element is a bolt which is threaded at least partially at each of its ends protruding from the support plate (120), wherein this bolt can be held with knob elements (122) provided at each of these ends and which, when screwed in, secure all the aforementioned elements. The knob elements (122) are essentially identical to the knob elements (32A) (32B) of the support base (3) or to the knob elements (45C) of the frame (4), so they also have security means to prevent being extracted by unauthorised third parties.

It can also be seen in Figure (5B) that the first coupling end (102) comprises essentially circular protrusions (102') provided for fitting in the inner guide elements (41B) and at the same time enabling the anchoring base (101) to pivot relative to the fastening element (121), when coupled. This pivoting capacity allows the anchoring base (101) to pivot relative to the frame (4), and therefore enables the bike rack (100) to go from a service position to a folded position, as will be described in greater detail below.

Moreover, the second coupling end (103) of the anchoring base (101) is provided for being coupled in a supported manner in the support base (3). For such purpose, this second coupling end (103) is configured as a curved cavity or recess which fits on a likewise curved protrusion (38) provided in the support base (3). In this fitted position, a fastening element (not shown) goes through a hole (41D) of the first vertical element and a hole (104) provided in said second coupling end (102), wherein this fastening element is crowned at each end with knob elements (not shown), similar to the knob elements (122). The latter firmly couples the second coupling end (103) to the support base (3) and to the frame (4), whereby the ski rack (100) is coupled to the support structure (1) for a carrier.

As observed in Figure 5A, the bike rack (100) further comprises a main support element (110) that can be coupled to the anchoring base (101). This main support element (101) extends in a direction towards the back of the vehicle, when the support structure (1) is coupled to the tow ball hitch (2), being essentially orthogonal to the first vertical element (41) of the frame (4).

The main support element (110) can be coupled to the anchoring base (101) by means of any known temporary or permanent holding means; however, the invention has provided a third coupling end (106) in the anchoring base (101) for coupling the main support element (110). In preferred embodiments, as observed in Figure 5B, the third coupling end (106) is configured as a cavity provided for telescopically receiving the main support element (110) such that at least a portion of said main support element (110) can be retracted into the anchoring base (101) to reduce the outside or cantilevered length of the main support element (110).

Holding means (107) are provided in the proximity of the third coupling end (106) for assuring the coupling of the main support element (110). As mentioned above, these holding means (107) can be configured in any known manner; however, when the main support element (110) is telescopically received in the third coupling end (106), the holding means (107) are configured as a threaded fastener or the like going through holes provided in the main support element (110) and in the proximity of the third coupling end (106) and crowned with knob elements similar to those already described above. This configuration allows an easy coupling and uncoupling of the main support element (110) to/from the anchoring base (101).

Moreover, the main support element (110) can be an elongated tubular element having a rectangular or square polygonal cross-sectional area or the like provided for being fitted at the third coupling end (106). However, as observed in Figures 5A and 5C, the main support element (110) is a telescopic element with at least two segments telescopically connected to one another, preferably three segments telescopically connected to one another. As observed in Figure 5C, the main support element (110) is thereby comprised of a first telescopic segment (111) that can be connected to the anchoring base (101) and to a second telescopic segment (112), which can in turn be connected to a third telescopic segment (113) which corresponds with the telescopic outermost segment or the one farthest away from the anchoring base (101).

Each of these segments (111) (112) (113) can be telescopically connected to one another. In the preferred embodiment in the invention, the first telescopic segment (111) is fitted telescopically in the anchoring base (101), the second telescopic segment (112) is fitted telescopically in the first telescopic segment (111), and the third telescopic segment (113) is fitted telescopically in the second telescopic segment (112). These telescopic segments (111) (112) (113) comprise square polygonal cross-sections, rectangular polygonal cross-sections or the like, such that they fit together without rotating relative to one another.

The extension or the amount by which each of these segments (111) (112) (113) protrudes relative to one another will depend on the number of bikes to be transported. Each of these telescopic segments (111) (112) (113) can have at least two extension positions relative to one another: one position in which they are extended to make space for the bikes to be transported, and another one in which the length by which one protrudes relative to the other is the smallest possible so as to reduce dimensions and facilitating the folding of the bike rack when it is not in use. It is also possible to place the telescopic segments (111) (112) (113) such that one is extended and the other one is stowed, for example to transport one or two bikes, while the rest of the bike rack (100) is stowed. This telescopic configuration entails an important technical advantage of the invention compared to other known bike racks on the market, since the bike rack (100) of the invention can be adapted to any vehicle, particularly to those in which the cantilevered load should not protrude from the back of the vehicle by more than 15% of the total length thereof, whereby at least one of the telescopic segments (111) (112) (113) can even be eliminated to adapt the bike rack (100) to a length required for each vehicle in particular.

For fixing each of the telescopic segments (111) (112) (113) in one of the extended or stowed positions, there have been provided holes in each of said telescopic segments (111) (112) (113), through which threaded fasteners pass, said fasteners being crowned by knob elements in a manner similar to the holding means (107), which in this case couple the first telescopic segment (111). To simplify the description of the invention, the threaded fasteners with their respective knob elements have been omitted in Figure 5C; however, a skilled person will know that said elements must be part of the invention to be able to fix the telescopic segments (111) (112) (113) in their different extended or stowed positions.

The first telescopic segment (111) to which a crossbar element (111A) can be coupled, essentially orthogonal to the first telescopic segment (111), can best be seen in Figure 5C, with the crossbar element (111A) being configured for receiving in a supported manner the wheels of the bike to be transported. This crossbar element (111A) can have a cross-section suitable for keeping the wheel in the suitable position, and in the preferred embodiment shown in the figures, it has a V-shaped profile for the partial fitting of the wheel. The crossbar element (111A) can be coupled by means of techniques known in the art which allow a permanent attachment, such as welding, or by means of fasteners such as bolts, rivets, etc. Likewise, the crossbar element (111A) can be a single segment, or two segments arranged one on each side of the crossbar element (111A).

It can be seen from Figure 5C that the second telescopic segment (112) comprises a crossbar element (112A) that can be coupled thereto, the third telescopic segment (113) comprises a crossbar element (113A) that can be coupled thereto, and that the anchoring base (101) likewise comprises a crossbar element (101A). It should be pointed out that the crossbar elements (112A) (113A) and (101) are similar in construction to what has been described for the crossbar element (111A) both in shape and in the coupling with the respective telescopic segment or base thereof.

End protection elements (101AB) (111AB) (112AB) (113AB) are arranged at the ends of the crossbar elements (101A) (111A) (112A) (113A) to protect these free ends and at the same time prevent the movement of the wheels of the bike in said crossbar elements (101A) (111A) (112A) (113A).

Likewise, it is observed in Figures 5A, 5B and 5C that the bike rack (100) comprises at least one arm element (111B) that can be pivotably coupled to the main support element (110) which is operatively linked to the crossbar element (111A) and configured for holding the bike frame. Particularly this arm element (111B) is coupled to a pivoting joint (111C) which allows the free pivoting movement of said arm element (111B). From the mentioned figures it can be seen that by each telescopic segment (111) (112) (113) and in the anchoring base (101) there is provided an arm element (111B) (112B) (113B) (101B) coupled respectively in the pivoting joint (111C) (112C) (113C) (101C).

When, for example, a bike has been placed on the bike rack with the wheels supported in the crossbar element (111A), the arm element (111B) pivots to be placed at the height of the bike frame. For holding or coupling the bike frame to said arm element (111B), the invention provides a hitching element (130) that is movable in the arm element (111B) and configured for holding by envelopment at least one of the tubes that are part of the bike frame. Given that the dimensions of bikes vary depending on the model, size, type, etc., in addition to the pivoting of the arm element (111B), the latter comprises graduation means (130') which allow the position of the hitching element (130) relative to the arm element (111B) to be modified, such that it is possible to adapt the hold to the size of the bike frame.

In the embodiment shown in Figures 5A, 5B and 5C, the graduation means (130') are in the form of a linear groove provided in the arm element (111B) through which the hitching element (130) can run to be adjusted to the tube of the bike frame.

As can be seen in Figure 5A, in each of the arm elements (111B) (112B) (113B) (101B) there is provided a hitching element (130) with the respective graduation means (130').

An elastic holding element (140) is arranged together with each of the crossbar elements (111A) (112A) (113A) (101A) for holding at least one of the wheels of the bike when the bike is placed on the respective crossbar element. As observed in Figure 5A, for a better hold of the bike there are arranged two elastic holding elements (140) for each of the crossbar elements (111A) (112A) (113A) (101A), such that they suitably hold the wheels of the bike individually. The elastic holding element (140) can be in the form of a releasable strap, a belt, or a similar elastic element which allows the wheels or another element of the bike supported in the crossbar element (111A) (112A) (113A) (101A) to be releasably held, wherein in said crossbar element (111A) (112A) (113A) (101A) there can be a coupling guide (not shown) in which the elastic holding element (140) can be inserted and prevented from moving from its position.

Moreover, and as observed in Figure 5C, the telescopic segments (111) (112) (113) are similar in construction; however, the third telescopic segment (113) is slightly different, since at the end farthest away from the frame (4) it comprises a licence plate holder support (150) configured for releasably coupling a licence plate holder (8), as observed in Figure (5A). In the embodiment shown in Figure 5A, the licence plate holder support (150) is shown as a plate (151) threadably secured to a bracket (152) which at least partially envelops the licence plate holder (8). The bracket (152) is provided with holes into which there can be inserted a series of threaded fasteners (not shown) which at the same time are inserted into holes (not shown) in the plate (151) provided in protrusions (not shown) for securing said plate (151) to the bracket (152). Likewise, the plate (151) comprises dovetail-shaped coupling grooves (153) prepared for releasably receiving dovetail-shaped protrusions (81) arranged in the licence plate holder (8). In this configuration, the crossbar element (113A) and the arm element (113B) are located above the licence plate holder (8).

A rolling element (154) is coupled at a lower end of the bracket (152) for the purpose of facilitating transport of the bike rack (100) by rolling when it is uncoupled from the frame (4) and from the support base (3).

Moreover, and as observed in Figures 5A to 5C, the anchoring base (101) also comprises a plate (155) provided for coupling the licence plate holder (8) in the folded state of the ski rack (100). Similar to how the plate (151) is held in the bracket (152), the anchoring base (101) is provided with holes into which there can be inserted a series of threaded fasteners (not shown) which at the same time are inserted into holes (not shown) in the plate (155) provided in protrusions (not shown) for securing said plate (155) to the anchoring base (101). The plates (151) and (155) are similar in construction, such that the plate (155) also has dovetail-shaped coupling grooves (not shown) prepared for releasably receiving dovetail-shaped protrusions (81) arranged in the licence plate holder (8).

The bike rack is shown in Figure 5A in an extended or service state. When the bike rack (100) is to be left in the folded position, the licence plate holder (8) is removed from the plate (151), the telescopic segments (111) (112) (113) are contracted and are secured at their smallest possible extension, the second coupling end (103) is released from its coupling position, the anchoring base (101) is made to pivot relative to the fastening element (121) such that a hole (105) provided in said anchoring base (101), spaced from the first coupling end (102), is made to coincide with a hole (41E) provided in the first vertical element (41), and it is secured in that position with a threaded fastener (not shown) crowned with knob elements essentially identical to the knob elements (32A) (32B) of the support base (3), or to the knob elements (45C) of the frame (4), whereby they likewise have security means to prevent being extracted by unauthorised third parties, and the licence plate holder (8) is placed in the plate (155). In this position, when no load is being carried in the bike rack (100), the rack can be transported folded and coupled to the tow ball hitch (2), reducing the total vehicle and assembly length.

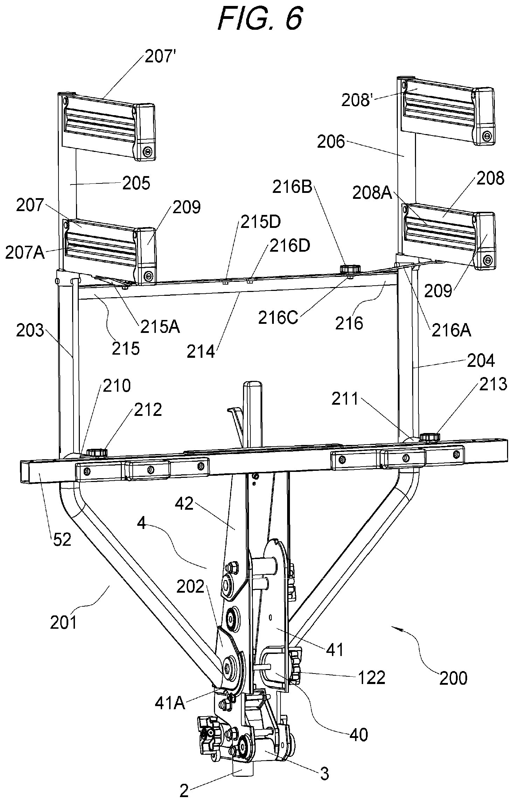

Moreover, the invention comprises a ski rack (200) configured for being coupled to the support structure (1) for a carrier wherein, as seen in Figure 6, the ski rack (200) comprises a support structure (201) that can be coupled to the additional load anchoring means (40) of the frame. This support structure (201) comprises at a coupling end a curved plate (202) configured for partially surrounding the first vertical element (41) and being introduced in the outer guide elements (41A) and being secured by a fastening element going through said curved plate (202) through holes provided therein, which fastener at the same time goes through the hole (41E) of the first vertical element (41) of the frame (4), being crowned with knob elements (122) which are essentially identical to the knob elements (32A) (32B) of the support base (3), or to the knob elements (45C) of the frame (4), whereby they also have security means to prevent being extracted by unauthorised third parties.

Extending vertically upwards from the curved plate (202) there are two curved elongated elements (203) (204) which are symmetrical relative to the first vertical element (41). In the upper portion of each of the curved elongated elements (203) (204), there are provided at least two pivotable supports (205) (206) configured for pivoting relative to said curved elongated elements (203) (204). In each of the pivotable supports (205) (206), there is provided at least one clamp element (207) (208) which is configured for holding skis, snowboards or the like. In each of the clamp elements (207) (208), there are provided closure elements (209) configured for keeping the clamp elements (207) (208) closed and preventing skis, snowboards or the like from coming out when they are being transported in said clamp elements (207) (208).

From each of the curved elongated elements (203) (204) there extend holding elements (210) (211) configured for holding the support structure (201), that is, for holding said curved elongated elements (203) (204) to the upper crossbar (52) of the frame (4). At the end of the holding elements (210) (211) contacting the upper crossbar (52), there is an attachment element (212) (213), wherein the attachment element (212) (213) can be for a permanent or releasable attachment. In the embodiment shown in Figure 6, the attachment element (212) (213) is a threaded fastener going through holes in the holding elements (210) (211) and screwed into threaded holes provided in the upper crossbar (52), being crowned by a knob element, similar to the others described above.

At least one crossbar element (214) is arranged for attaching the curved elongated elements (203) (204), wherein coupled to said crossbar element (214) there are blocking means (215) (216) configured for blocking the pivotable supports (205) (206) between an extended position and a folded position.

As seen in Figure 6, the blocking means (215) (216) are in the form of angular crossbars (215A) (216A) pivotably coupled at a first end to the clamp elements (207) (208) and at a second end to a threaded fastener (215B) (not shown) (216B) crowned with a knob element going through said angular crossbar (215A) (216A) and screwed into threaded holes (215C) (not shown) (216C) provided in the element crossbar (214). To fold the pivotable supports (205) (206), the threaded fastener (215B) (216B) is coupled to threaded holes (215D) (216D) oriented more towards the centre of said crossbar element (214).

The clamp elements (207) (208) comprise elastic elements (207A) (208B) configured for contacting skis, snowboards or the like, and holding them such that they can neither more nor slip when they are being transported.

Furthermore, additional clamp elements (207') (208') are provided in the pivotable supports (205) (206) for facilitating the transport of skis, snowboards or the like.

As shown in Figure 7, it is possible to configure a storage and transport system provided for mounting on a tow ball hitch (2) of a vehicle, wherein this storage and transport system is comprised of the support structure (1) for a carrier with all the elements as described up to this point and at least one container (6), as described, coupled to the lower anchoring support (51A) provided in the lower crossbar (51) and to the upper anchoring support (52A) provided in the upper crossbar (52) of the frame (4) of said support structure (1) for a carrier and the licence plate holder (8) coupled to the outer coupling (70) of the container (6). This system can also incorporate at least one, preferably two containers (6) individually coupled respectively to the lower anchoring supports (51A) provided in each of the lower auxiliary crossbars (53) of the frame (4) of the support structure (1) for a carrier and individually coupled respectively to the upper anchoring supports (52A) provided in each of the upper auxiliary crossbars (54) of the frame (4) of the support structure (1) for a carrier. Although the embodiment shown in Figure 7 does not show it, by recommendation the container (6) is preferably centred relative to the length of the lower crossbar (51) and of the upper crossbar (52) of the frame (4) to balance the load; however, other locations are admissible within the scope of the invention.

Moreover and as can be derived from what is shown in Figure 7, it is possible for the storage and transport system provided for mounting on a tow ball hitch (2) of a vehicle to comprise two containers (6) each of which is coupled to the lower anchoring support (51A) provided in the lower crossbar (51) and to the upper anchoring support (52A) provided in the upper crossbar (52) of the frame (4) of the support structure (1) for a carrier and the licence plate support (8) coupled to the outer coupling (70) of each of the containers (6). This system can also incorporate at least one, preferably two containers (6) individually coupled respectively to the lower anchoring supports (51A) provided in each of the lower auxiliary crossbars (53) of the frame (4) of the support structure (1) for a carrier and individually coupled respectively to the upper anchoring supports (52A) provided in each of the upper auxiliary crossbars (54) of the frame (4) of the support structure (1) for a carrier.

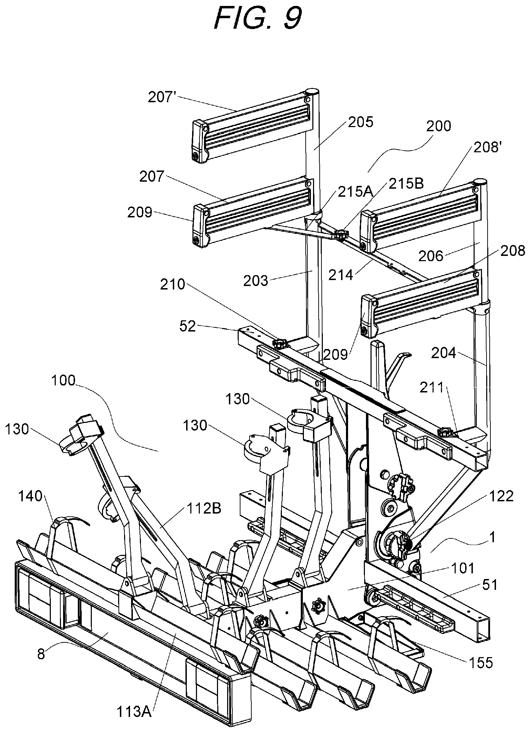

In addition to the foregoing, the invention includes a second embodiment of a storage and transport system, as observed in Figures 9 to 11, provided for mounting on a tow ball hitch (2) of a vehicle comprising a support structure (1) for a carrier, as amply described, a bike rack (100), as described above, coupled to the frame (4) and to the support base (3) of the support structure (1), with said bike rack (100) being oriented towards the back of the vehicle and a licence plate holder (8) coupled to the licence plate holder support (150) of the main support element (100) of the bike rack (100). This configuration of the storage and transport systems can also include a ski rack (200), as described, coupled to the frame (4) of the support structure (1) for a carrier.

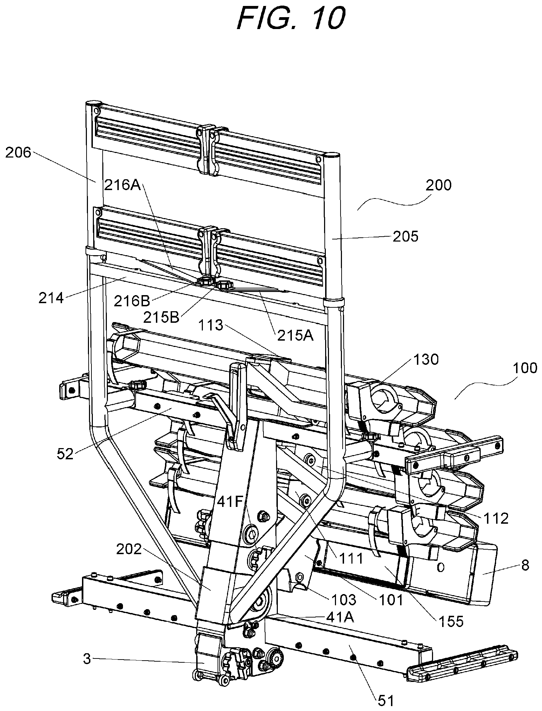

As described above, the bike rack (100) and the ski rack (200) can be folded and/or detached from the support structure (1) for a carrier. To illustrate the foregoing, the bike rack (100) in the folded position relative to the support structure (1), as well as the likewise folded ski rack (200) can be observed in Figure 10.

In the mentioned Figure 10, it is observed how the licence plate holder (8) has been removed from the plate (151) (not shown in Figure 10), the telescopic segments (111) (112) (113) have been contracted and fixed at their smallest extension possible relative to one another and relative to the anchoring base (101), the second coupling end (103) has been released from its coupling position, the anchoring base (101) has been pivoted relative to the fastening element (121) such that the hole (105) provided in said anchoring base (101) has been made to coincide with the hole (41E) provided in the first vertical element (41), and in that position it is secured with a threaded fastener crowned with knob elements (41F) essentially identical to the knob elements (32A) (32B) of the support base (3). The licence plate holder (8) is then placed in the plate (155). In this manner, the bike rack (100) can be transported folded and coupled to the support structure (1) when it has been fixed to the tow ball hitch (2).

In this folded position of the bike rack (100), commercially available V20 plates must be coupled thereto in order to comply with the traffic regulations.

The ski rack (200) in its folded state, in which the pivotable supports (205) (206) have been moved such that the threaded fastener (215B) (216B) has been coupled to threaded holes (215D) (216D) oriented more towards the centre of said crossbar element (214) can be seen also in Figure 10. The pivotable supports (205) (206) are thereby oriented "inwardly" of the support structure (201) of the ski rack (200).

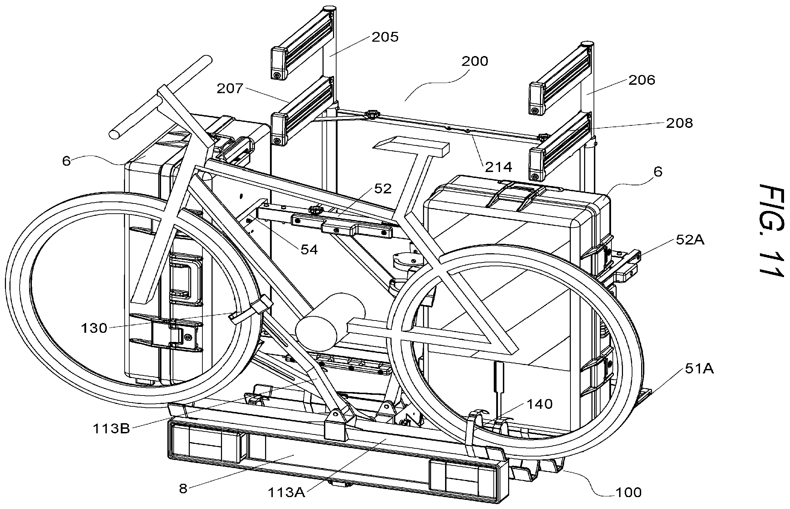

In Figure 11, it is also observed that the second embodiment of the storage and transport system comprises at least one container (6), as described above, coupled to the lower anchoring support (51A) provided in the lower crossbar (51) and to the upper anchoring support (52A) provided in the upper crossbar of the frame (4) of said support structure (1) for a carrier, and/or at least one, preferably two containers (6) individually coupled respectively to the lower anchoring supports (51A) provided in each of the lower auxiliary crossbars (53) of the frame (4) of the support structure (1) for a carrier; and individually coupled respectively to the upper anchoring supports (52A) provided in each of the upper auxiliary crossbars (54) of the frame (4) of the support structure (1) for a carrier.

It can be seen in Figure 11 that the hitching element (130) of the arm element (113B) is holding the wheel of the bike; however, this should not be taken as being limiting or preferred, since said hitching element (130) can duly hold either the wheel, or a tube of the frame, or a portion or area of interest of the bike, given that the graduation means (130') allow the coupling of the hitching element (130) to be adjusted according to each particular situation. It will always be better to couple the bike by the frame for a more secure hold thereof on the bike rack (100).

Moreover, the person skilled in the art will recognise that, given the versatility of the invention, multiple configurations of storage and transport systems can be advantageously configured according to the preferred needs of the load to be transported. Thus, for example, in a diverse load situation, 4 containers (6) coupled as shown in the preceding paragraphs, two bikes coupled to the bike rack (100), and skis or the like coupled to the ski rack (200), can be transported at the same time.

In other cases, just the unfolded bike rack (100), transporting up to 4 bikes, without containers (6) or a ski rack, can be carried.

It is also possible to transport containers (6) on the auxiliary crossbars (53) (54), the folded bike rack (100) (like in Figure 10), and the ski rack (200) can be enabled for transporting elements that can be transported thereon.

As stated, there are multiple configurations of storage and transport systems which are within the scope of the present invention, and therefore said invention is not limited to any one in particular.

## Claims

1. A support structure (1) for a carrier provided for mounting on a tow ball hitch (2) of a vehicle, the tow ball hitch (2) having at least a spherical portion (2A) and a shaft portion (2B), wherein the spherical portion (2A) is provided with an upper planar region (21), an upper semi-spherical portion (22), a lower semi-spherical portion (23), and the shaft portion (2B) provided with at least a transition portion (24) and a shaft neck (25), with the support structure (1) comprising:
- a support base (3) couplable and fixable to the tow ball hitch (2), provided with fixing means (30) configured for securing the support base (3) in a fixed position relative to the ball hitch (2), and guiding means configured for guiding the unfolding of the frame (4) between the service position and the unfolded position;
- a frame (4) couplable to the support base (3) and unfolded from a service position to an unfolded position and vice versa; and
- actuation means provided in the frame and configured to enable the frame to be unfolded from the service position to the unfolded position;
wherein the fixing means (30) of the support base (3) comprises:
- a cavity (31) configured for fully receiving the upper semi-spherical portion (22) of the spherical portion (2A) and loosely receiving the shaft portion (2B) of the tow ball hitch (2);
- a first compression element (32) and a second compression element (33) couplable to one another and can be slidably coupled to the support base (3), configured for holding the lower semi-spherical portion (23) and the shaft portion neck (25) of the tow ball hitch (2), wherein the first compression element (32) comprises a first holding body (32B) configured for contacting part of the spherical portion (2A) of the tow ball hitch (2), and the second compression element (33) comprises a second holding body (33B) configured for contacting part of the spherical portion (2A) of the tow ball hitch (2); and
- a retention element (34) couplable to the support base (3) and configured for contacting and pressing against the upper planar region (21) of the spherical portion of the tow ball hitch (2);
**characterised by** the fact that the fixing means (30) of the support base (3) further comprises
- a first bolt (32C) couplable to the first compression element (32) extending in an essentially orthogonal manner from the first holding body (32B), entering the second holding body (33B), wherein a second knob element (33A), which is operatively connected and configured to rotate relative to the second holding body (33B), is configured for being threadedly coupled to said first bolt (32C); and
- a second bolt (33C) couplable to the second compression element (33) extending in an essentially orthogonal manner from the second holding body (33B), entering the first holding body (32B), wherein a first knob element (32A), which is operatively connected and configured to rotate relative to the first holding body (32B), is configured for being threadedly coupled to said second bolt (33C).

2. The support structure (1) according to claim 1, wherein the frame (4) comprises at least:
- a vertical element couplable to the support base (3) and unfolded between the service position and the unfolded position;
- a lower crossbar (51) coupled at a first end of the vertical element;
- an upper crossbar (52) coupled at a second end of the vertical element which is opposite the first end; and
- additional load anchoring means (40) provided in the vertical element.

3. The support structure (1) according to claim 1, wherein the frame (4) comprises at least:
- a first vertical element (41) movably couplableto the support base (3) between the service position and the unfolded position;
- a second vertical element (42) pivotably couplable to the first vertical element (41) and configured for moving between an extended position and a folded position relative to the first vertical element (41), wherein the first vertical element (41) and the second vertical element (42) are configured for at least partially fitting together in the folded position;
- blocking means (45) linked to the first vertical element (41) and the second vertical element (42) and configured for fixing the movement of the second vertical element (42) in the extended position and for fixing the movement of the second vertical element (42) in the folded position;
- a lower crossbar (51) coupled at a lower end of the first vertical element (41);
- an upper crossbar (52) coupled at an upper end of the second vertical element (42) which is opposite the lower end of the first vertical element (41); and
- additional load anchoring means (40) provided in the first vertical element (41).

4. The support structure according to any of claims 2 or 3, wherein the frame (4) comprises at least:
- a lower anchoring support (51A) provided in the lower crossbar (51); and
- an upper anchoring support (52A) provided in the upper crossbar (52).

5. The support structure according to any of claims 2 to 4, wherein the frame (4) comprises:
- lower auxiliary crossbars (53) couplable to each of the ends of the lower crossbar (51) and oriented orthogonally relative to said lower crossbar (51); and
- upper auxiliary crossbars (54) couplable to each of the ends of the upper crossbar (52) and oriented orthogonally relative to said upper crossbar (52);
- lower anchoring supports (51A) provided in the lower auxiliary crossbars (53); and
- upper anchoring supports (52A) provided in the upper crossbars (52).

6. A storage and transport system provided for mounting on a tow ball hitch of a vehicle, **characterised in that** it comprises:
- a support structure (1) for a carrier according to claim 4; and
- at least one container (6) couplable to the lower anchoring support (51A) provided in the lower crossbar (51) and to the upper anchoring support (52A) provided in the upper crossbar (52) of the frame (4) of said support structure (1) for a carrier, the container (6) comprising:
an essentially box-shaped hollow body (6'), comprising a front body portion (61) and a rear body portion (62) connected by a hinged joint (63), with said front body portion (61) and rear body portion (62) being configured for being coupled to one another in a sealed or leak-tight manner;
- a lower coupling means (67) provided in the hollow body (6') and configured for being releasably coupled to the lower anchoring support (51A) of the frame (4) of the support structure (1) for a carrier;
- a hitching means (68) provided in the hollow body (6') and configured for being releasably coupled to the upper anchoring support (52A) of the frame (4) of the support structure (1) for a carrier;
- a hitching actuation means (69) connected with the hitching means (68) and configured for releasing said hitching means (68) from the upper anchoring support (52A);
- an outer coupling (70) provided in the hollow body (6') and configured for releasably coupling a licence plate holder (8);
wherein in the hollow body (6'),
the lower coupling means (67) is provided on a lower face of the front body portion (61), wherein the hitching means (68) is provided on a front face of the front body portion (61);
the hitching actuation means (69) being provided in the front body portion (61);
the outer coupling (70) being provided in the rear body portion (62) and configured for releasably coupling the licence plate holder (8);
- a reflective plate (72) is provided on a rear face of the rear body portion (62); and
- wheels (73) are provided on the lower face of the front body portion (61);
and
- a cover (9) configured for at least partially covering the container (6); and
- a licence plate holder (8) coupled to the container (6).

7. The storage and transport system according to claim 6, comprising two containers (6) individually coupled respectively to the lower anchoring supports (51A) provided in each of the lower auxiliary crossbars (53) of the frame (4) of the support structure (1) for a carrier; and individually coupled respectively to the upper anchoring supports (52A) provided in each of the upper auxiliary crossbars (54) of the frame (4) of the support structure (1) for a carrier.

8. A storage and transport system provided for mounting on a tow ball hitch (2) of a vehicle, **characterised in that** it comprises:
- a support structure (1) for a carrier according to claims 2 to 5;
- a bike rack (100) couplable to the frame (4) and to the support base (3) of the support structure (1), with said bike rack (100) being oriented towards the back, the bike rack (100) comprising:
- an anchoring base (101) couplable to the additional load anchoring means of the frame (4) and to the support base (3), with the anchoring base (101) configured for pivoting relative to said frame (4);
- a crossbar element (101A) couplable to the anchoring base (101);
- an arm element (101B) pivotably coupled to the anchoring base (101);
- a main support element (110) couplable to the anchoring base (101) and projects orthogonally to the frame (4);
- at least one crossbar element (111A) couplable to the main support element (110), configured for receiving the wheels of a bike;
- at least one arm element (111B) pivotably couplable to the main support element (110), operatively linked to the crossbar element (111A), and configured for coupling the bike frame;
- at least one hitching element (130) movably connectable to the arm element (111B) and configured for securing at least one portion of a bike frame to said arm element (111B);
- a licence plate holder support (150) that can be coupled to the main support element (110) at an end which is opposite the frame (4); and
- a second licence plate holder support that can be coupled to the anchoring base (101);
wherein the main support element (110) is a telescopic element which at the same time is telescopically connectable to the anchoring base (101);
and
- a licence plate holder (8) coupled to the licence plate holder support (150) of the main support element (100) of the bike rack (100).

9. The storage and transport system according claim 8, comprising a ski rack (200) couplable to the frame (4) of the support structure (1) for a carrier, the ski rack (200) comprising:
- one support structure (201) couplable to the additional load anchoring means (40) of the frame (4);
- at least two pivotable supports (205) (206) couplable to the support structure (201) configured for holding skis or snowboards;
- blocking means configured for blocking the pivotable supports (205) (206) between an extended position and a folded position;
- at least one clamp element (207) (208) provided in each pivotable support (205) (206) configured for holding skis or snowboards; and
- a closure element (209) (210) provided in the clamp element (207) (208) configured for keeping said clamp element (207) (208) closed.

10. The storage and transport system according to claims 8 or 9, comprising at least one container (6) couplable to the lower anchoring support (51A) provided in the lower crossbar (51) and to the upper anchoring support (52A) provided in the upper crossbar (52) of the frame (4) of said support structure (1) for a carrier, the container (6) comprising:
- an essentially box-shaped hollow body (6'), comprising a front body portion (61) and a rear body portion (62) connected by a hinged joint (63), with said front body portion (61) and rear body portion (62) being configured for being coupled to one another in a sealed or leak-tight manner;
- a lower coupling means (67) provided in the hollow body (6') and configured for being releasably coupled to the lower anchoring support (51A) of the frame (4) of the support structure (1) for a carrier;
- a hitching means (68) provided in the hollow body (6') and configured for being releasably coupled to the upper anchoring support (52A) of the frame (4) of the support structure (1) for a carrier;
- a hitching actuation means (69) connected with the hitching means (68) and configured for releasing said hitching means (68) from the upper anchoring support (52A);
- an outer coupling (70) provided in the hollow body (6') and configured for releasably coupling a licence plate holder (8);
wherein in the hollow body (6'),
the lower coupling means (67) is provided on a lower face of the front body portion (61), wherein the hitching means (68) is provided on a front face of the front body portion (61);
the hitching actuation means (69) being provided in the front body portion (61);
the outer coupling (70) being provided in the rear body portion (62) and configured for releasably coupling the licence plate holder (8);
- a reflective plate (72) is provided on a rear face of the rear body portion (62); and
- wheels (73) are provided on the lower face of the front body portion (61);
and
- a cover (9) configured for at least partially covering the container (6).

11. The storage and transport system according to any of claims 8 to 10, comprising at least one container (6) coupled to one of the lower anchoring supports (51A) provided in each of the lower auxiliary crossbars (53) of the frame (4) of the support structure (1) for a carrier; and coupled to one of the upper anchoring supports (52A) provided in each of the upper auxiliary crossbars (54) of the frame (4) of the support structure (1) for a carrier, the container (6) comprising:
- an essentially box-shaped hollow body (6'), comprising a front body portion (61) and a rear body portion (62) connected by a hinged joint (63), with said front body portion (61) and rear body portion (62) being configured for being coupled to one another in a sealed or leak-tight manner;
- a lower coupling means (67) provided in the hollow body (6') and configured for being releasably coupled to the lower anchoring support (51A) of the frame (4) of the support structure (1) for a carrier;
- a hitching means (68) provided in the hollow body (6') and configured for being releasably coupled to the upper anchoring support (52A) of the frame (4) of the support structure (1) for a carrier;
- a hitching actuation means (69) connected with the hitching means (68) and configured for releasing said hitching means (68) from the upper anchoring support (52A);
- an outer coupling (70) provided in the hollow body (6') and configured for releasably coupling a licence plate holder (8);
wherein in the hollow body (6'),
the lower coupling means (67) is provided on a lower face of the front body portion (61), wherein the hitching means (68) is provided on a front face of the front body portion (61);
the hitching actuation means (69) being provided in the front body portion (61);
the outer coupling (70) being provided in the rear body portion (62) and configured for releasably coupling the licence plate holder (8);
- a reflective plate (72) is provided on a rear face of the rear body portion (62); and
- wheels (73) are provided on the lower face of the front body portion (61);
and
- a cover (9) configured for at least partially covering the container (6).

## Patentansprüche

1. Stützstruktur (1) für einen Träger, der zum Montieren auf einem Anhängerkupplungskopf (2) eines Fahrzeugs bereitgestellt ist, wobei der Anhängerkupplungskopf (2) mindestens einen kugelförmigen Abschnitt (2A) und einen Schaftabschnitt (2B) aufweist, wobei der kugelförmige Abschnitt (2A) mit einer oberen planaren Region (21), einem oberen halbkugelförmigen Abschnitt (22), einem unteren halbkugelförmigen Abschnitt (23) versehen ist und der Schaftabschnitt (2B) mit mindestens einem Übergangsabschnitt (24) und einem Schafthals (25) versehen ist, wobei die Stützstruktur (1) Folgendes umfasst:
- eine Stützbasis (3), die an den Anhängerkupplungskopf (2) koppelbar und an demselben befestigbar ist und mit einem Befestigungsmittel (30), das zum Sichern der Stützbasis (3) in einer befestigten Position relativ zum Anhängerkopf (2) ausgelegt ist, und mit Führungsmitteln, die zum Führen des Aufklappens des Rahmens (4) zwischen der Wartungsposition und der ausgeklappten Position ausgelegt sind, versehen ist;
- einen Rahmen (4), der an die Stützbasis (3) koppelbar ist und aus einer Wartungsposition in eine ausgeklappte Position und umgekehrt ausgeklappt wird; und
- Betätigungsmittel, die im Rahmen bereitgestellt und dazu ausgelegt sind, das Aufklappen des Rahmens aus der Wartungsposition in die ausgeklappte Position zu ermöglichen; wobei das Befestigungsmittel (30) der Stützbasis (3) Folgendes umfasst:
- einen Hohlraum (31), der zum Aufnehmen des oberen halbkugelförmigen Abschnitts (22) des kugelförmigen Abschnitts (2A) und zum losen Aufnehmen des Schaftabschnitts (2B) des Anhängerkupplungskopfes (2) ausgelegt ist;
- ein erstes Komprimierungselement (32) und ein zweites Komprimierungselement (33), die aneinander koppelbar sind und gleitend an die Stützbasis (3) gekoppelt werden können und dazu ausgelegt sind, den unteren halbkugelförmigen Abschnitt (23) und den Schaftabschnitthals (25) des Anhängerkupplungskopfes (2) zu halten, wobei das erste Komprimierungselement (32) einen ersten Haltekörper (32B) umfasst, der zum Kontaktieren eines Teils des kugelförmigen Abschnitts (2A) des Anhängerkupplungskopfes (2) ausgelegt ist, und das zweite Komprimierungselement (33) einen zweiten Haltekörper (33B) umfasst, der zum Kontaktieren eines Teils des kugelförmigen Abschnitts (2A) des Anhängerkupplungskopfes (2) ausgelegt ist; und
- ein Rückhalteelement (34), das an die Stützbasis (3) koppelbar und zum Kontaktieren der oberen planaren Region (21) des kugelförmigen Abschnitts des Anhängerkupplungskopfes (2) und zum Drücken gegen dieselbe ausgelegt ist;
**gekennzeichnet durch** die Tatsache, dass das Befestigungsmittel (30) der Stützbasis (3) ferner Folgendes umfasst
- einen ersten Bolzen (32C), der an das erste Komprimierungselement (32) koppelbar ist und sich in einer im Wesentlichen orthogonalen Weise vom ersten Haltekörper (32B) erstreckt und in den zweiten Haltekörper (33B) eintritt, wobei ein zweites Knaufelement (33A), das mit dem zweiten Haltekörper (33B) wirkverbunden und dazu ausgelegt ist, sich relativ zu demselben zu drehen, dazu ausgelegt ist, gewindemäßig an den ersten Bolzen (32C) gekoppelt zu sein; und
- einen zweiten Bolzen (33C), der an das zweite Komprimierungselement (33) koppelbar ist und sich in einer im Wesentlichen orthogonalen Weise vom zweiten Haltekörper (33B) erstreckt und in den ersten Haltekörper (32B) eintritt, wobei ein erstes Knaufelement (32A), das mit dem ersten Haltekörper (32B) wirkverbunden und dazu ausgelegt ist, sich relativ zu demselben zu drehen, dazu ausgelegt ist, gewindemäßig an den zweiten Bolzen (33C) gekoppelt zu sein.

2. Stützstruktur (1) nach Anspruch 1, wobei der Rahmen (4) mindestens Folgendes umfasst:
- ein vertikales Element, das an die Stützbasis (3) koppelbar ist und zwischen der Wartungsposition und der ausgeklappten Position ausgeklappt wird;
- eine untere Querstange (51), die an ein erstes Ende des vertikalen Elements gekoppelt ist;
- eine obere Querstange (52), die an ein zweites Ende des vertikalen Elements gekoppelt ist, das dem ersten Ende gegenüberliegt; und
- ein zusätzliches Lastverankerungsmittel (40), das im vertikalen Element bereitgestellt ist.

3. Stützstruktur (1) nach Anspruch 1, wobei der Rahmen (4) mindestens Folgendes umfasst:
- ein erstes vertikales Element (41), das zwischen der Wartungsposition und der ausgeklappten Position bewegbar an die Stützbasis (3) koppelbar ist;
- ein zweites vertikales Element (42), das schwenkbar an das erste vertikale Element (41) gekoppelt und zum Bewegen relativ zum ersten vertikalen Element (41) zwischen einer ausgestellten Position und einer eingeklappten Position ausgelegt ist, wobei das erste vertikale Element (41) und das zweite vertikale Element (42) zum mindestens teilweisen Zusammenpassen in der eingeklappten Position ausgelegt sind;
- ein Blockiermittel (45), das mit dem ersten vertikalen Element (41) und dem zweiten vertikalen Element (42) verlinkt ist und zum Fixieren der Bewegung des zweiten vertikalen Elements (42) in der ausgestellten Position und zum Fixieren der Bewegung des zweiten vertikalen Elements (42) in der eingeklappten Position ausgelegt ist;
- eine untere Querstange (51), die an ein unteres Ende des ersten vertikalen Elements (41) gekoppelt ist;
- eine obere Querstange (52), die an ein oberes Ende des zweiten vertikalen Elements (42) gekoppelt ist, das dem unteren Ende des ersten vertikalen Elements (41) gegenüberliegt; und
- ein zusätzliches Lastverankerungsmittel (40), das im ersten vertikalen Element (41) bereitgestellt ist.

4. Stützstruktur nach einem der Ansprüche 2 oder 3, wobei der Rahmen (4) mindestens Folgendes umfasst:
- eine untere Verankerungsstütze (51A), die in der unteren Querstange (51) bereitgestellt ist; und
- eine obere Verankerungsstütze (52A), die in der oberen Querstange (52) bereitgestellt ist.

5. Stützstruktur nach einem der Ansprüche 2 bis 4, wobei der Rahmen (4) Folgendes umfasst:
- untere Hilfsquerstangen (53), die an jedes der Enden der unteren Querstange (51) koppelbar und relativ zur unteren Querstange (51) orthogonal ausgerichtet sind; und
- obere Hilfsquerstangen (54), die an jedes der Enden der oberen Querstange (52) koppelbar und relativ zur oberen Querstange (52) orthogonal ausgerichtet sind;
- untere Verankerungsstützen (51A), die in den unteren Hilfsquerstangen (53) bereitgestellt sind; und
- obere Verankerungsstützen (52A), die in den oberen Querstangen (52) bereitgestellt sind.

6. Aufbewahrungs- und Transportsystem, das zum Montieren auf einem Anhängerkupplungskopf eines Fahrzeugs bereitgestellt ist, **dadurch gekennzeichnet, dass** es Folgendes umfasst:
- eine Stützstruktur (1) für einen Träger nach Anspruch 4; und
- mindestens einen Behälter (6), der an die untere Verankerungsstütze (51A), die in der unteren Querstange (51) bereitgestellt ist, und an die obere Verankerungsstütze (52A) koppelbar ist, die in der oberen Querstange (52) des Rahmens (4) der Stützstruktur (1) für einen Träger bereitgestellt ist, wobei der Behälter (6) Folgendes umfasst:
einen im Wesentlichen kastenförmigen hohlen Körper (6'), der einen vorderen Körperabschnitt (61) und einen hinteren Körperabschnitt (62) umfasst, die mit einem Scharniergelenk (63) verbunden sind, wobei der vordere Körperabschnitt (61) und der hintere Körperabschnitt (62) dazu ausgelegt sind, in einer versiegelten oder leckdichten Weise aneinandergekoppelt zu sein;
- ein unteres Kopplungsmittel (67), das im hohlen Körper (6`) bereitgestellt und dazu ausgelegt ist, lösbar an die untere Verankerungsstütze (51A) des Rahmens (4) der Stützstruktur (1) für einen Träger gekoppelt zu sein;
- ein Kupplungsmittel (68), das im hohlen Körper (6') bereitgestellt und dazu ausgelegt ist, lösbar an die obere Verankerungsstütze (52A) des Rahmens (4) der Stützstruktur (1) für einen Träger gekoppelt zu sein;
- ein Kupplungsbetätigungsmittel (69), das mit dem Kupplungsmittel (68) verbunden und zum Lösen des Kupplungsmittels (68) aus der oberen Verankerungsstütze (52A) ausgelegt ist;
- eine äußere Kupplung (70), die im hohlen Körper (6') bereitgestellt und zum lösbaren Koppeln eines Nummernschildhalters (8) ausgelegt ist;
wobei im hohlen Körper (6'),
das untere Kopplungsmittel (67) auf einer unteren Seite des vorderen Körperabschnitts (61) bereitgestellt ist, wobei das Kupplungsmittel (68) auf einer vorderen Seite des vorderen Körperabschnitts (61) bereitgestellt ist;
wobei das Kupplungsbetätigungsmittel (69) im vorderen Körperabschnitt (61) bereitgestellt ist;
wobei die äußere Kupplung (70) im hinteren Körperabschnitt (62) bereitgestellt und zum lösbaren Koppeln des Nummernschildhalters (8) ausgelegt ist;
- auf einer Rückseite des hinteren Körperabschnitts (62) eine reflektierende Platte (72) bereitgestellt ist; und
- auf der unteren Seite des vorderen Körperabschnitts (61) Räder (73) bereitgestellt sind;
und
- eine Abdeckung (9), die dazu ausgelegt ist, den Behälter (6) mindestens teilweise abzudecken; und
- einen Nummernschildhalter (8), der an den Behälter (6) gekoppelt ist.

7. Aufbewahrungs- und Transportsystem nach Anspruch 6, das zwei Behälter (6) umfasst, die einzeln jeweils an die unteren Verankerungsstützen (51A) gekoppelt sind, die in jeder der unteren Hilfsquerstangen (53) des Rahmens (4) der Stützstruktur (1) für einen Träger bereitgestellt sind; und einzeln jeweils an die oberen Verankerungsstützen (52A) gekoppelt sind, die in jeder der oberen Hilfsquerstangen (54) des Rahmens (4) der Stützstruktur (1) für einen Träger bereitgestellt sind.

8. Aufbewahrungs- und Transportsystem, das zum Montieren auf einem Anhängerkupplungskopf (2) eines Fahrzeugs bereitgestellt ist, **dadurch gekennzeichnet, dass** es Folgendes umfasst:
- eine Stützstruktur (1) für einen Träger nach den Ansprüchen 2 bis 5;
- einen Fahrradhalter (100), der an den Rahmen (4) und die Stützbasis (3) der Stützstruktur (1) koppelbar ist, wobei der Fahrradhalter (100) nach hinten ausgerichtet ist, wobei der Fahrradhalter (100) Folgendes umfasst:
- eine Verankerungsbasis (101), der an das zusätzliche Lastverankerungsmittel des Rahmens (4) und an die Stützbasis (3) koppelbar ist, wobei die Verankerungsbasis (101) zum Schwenken relativ zum Rahmen (4) ausgelegt ist;
- ein Querstangenelement (101A), das an die Verankerungsbasis (101) koppelbar ist;
- ein Armelement (101B), das schwenkbar an die Verankerungsbasis (101) gekoppelt ist;
- ein Hauptstützelement (110), das an die Verankerungsbasis (101) koppelbar ist und orthogonal zum Rahmen (4) vorsteht;
- mindestens ein Querstangenelement (111A), das an das Hauptstützelement (110) koppelbar und zum Aufnehmen der Räder eines Fahrrads ausgelegt ist;
- mindestens ein Armelement (111B), das schwenkbar an das Hauptstützelement (110) koppelbar, mit dem Querstangenelement (111A) wirkverlinkt und zum Koppeln des Fahrradrahmens ausgelegt ist;
- mindestens ein Kupplungselement (130), das bewegbar mit dem Armelement (111B) verbindbar und zum Sichern mindestens eines Abschnitts des Fahrradrahmens am Armelement (111B) ausgelegt ist;
- eine Nummernschildhalterstütze (150), die an ein dem Rahmen (4) gegenüberliegendes Ende an das Hauptstützelement (110) gekoppelt werden kann; und
- eine zweite Nummernschildhalterstütze, die an die Verankerungsbasis (101) gekoppelt werden kann;
wobei das Hauptstützelement (110) ein Teleskopelement ist, das gleichzeitig teleskopisch mit der Verankerungsbasis (101) verbindbar ist;
und
- einen Nummernschildhalter (8), der an die Nummernschildhalterstütze (150) des Hauptstützelements (100) des Fahrradhalters (100) gekoppelt ist.

9. Aufbewahrungs- und Transportsystem nach Anspruch 8, das einen Skihalter (200) umfasst, der an den Rahmen (4) der Stützstruktur (1) für einen Träger koppelbar ist, wobei der Skihalter (200) Folgendes umfasst:
- eine Stützstruktur (201), die an das zusätzliche Lastverankerungsmittel (40) des Rahmens (4) koppelbar ist;
- mindestens zwei schwenkbare Stützen (205) (206), die an die Stützstruktur (201) koppelbar und zum Halten von Skiern oder Snowboards ausgelegt sind;
- ein Blockiermittel, das zum Blockieren der schwenkbaren Stützen (205) (206) zwischen einer ausgestellten Position und einer eingeklappten Position ausgelegt ist;
- mindestens ein Klemmelement (207) (208), das in jeder schwenkbaren Stütze (205) (206) bereitgestellt und zum Halten von Skiern oder Snowboards ausgelegt ist; und
- ein Schließelement (209) (210), das im Klemmelement (207) (208) bereitgestellt und zum Geschlossenhalten des Klemmelements (207) (208) ausgelegt ist.

10. Aufbewahrungs- und Transportsystem nach Anspruch 8 oder 9, das mindestens einen Behälter (6), der an die untere Verankerungsstütze (51A), die in der unteren Querstange (51) bereitgestellt ist, und an die obere Verankerungsstütze (52A) koppelbar ist, die in der oberen Querstange (52) des Rahmens (4) der Stützstruktur (1) für einen Träger bereitgestellt ist, wobei der Behälter (6) Folgendes umfasst:
- einen im Wesentlichen kastenförmigen hohlen Körper (6`), der einen vorderen Körperabschnitt (61) und einen hinteren Körperabschnitt (62) umfasst, die mit einem Scharniergelenk (63) verbunden sind, wobei der vordere Körperabschnitt (61) und der hintere Körperabschnitt (62) dazu ausgelegt sind, in einer versiegelten oder leckdichten Weise aneinandergekoppelt zu sein;
- ein unteres Kopplungsmittel (67), das im hohlen Körper (6') bereitgestellt und dazu ausgelegt ist, lösbar an die untere Verankerungsstütze (51A) des Rahmens (4) der Stützstruktur (1) für einen Träger gekoppelt zu sein;
- ein Kupplungsmittel (68), das im hohlen Körper (6') bereitgestellt und dazu ausgelegt ist, lösbar an die obere Verankerungsstütze (52A) des Rahmens (4) der Stützstruktur (1) für einen Träger gekoppelt zu sein;
- ein Kupplungsbetätigungsmittel (69), das mit dem Kupplungsmittel (68) verbunden und zum Lösen des Kupplungsmittels (68) aus der oberen Verankerungsstütze (52A) ausgelegt ist;
- eine äußere Kupplung (70), die im hohlen Körper (6') bereitgestellt und zum lösbaren Koppeln eines Nummernschildhalters (8) ausgelegt ist;
wobei im hohlen Körper (6'),
das untere Kopplungsmittel (67) auf einer unteren Seite des vorderen Körperabschnitts (61) bereitgestellt ist, wobei das Kupplungsmittel (68) auf einer vorderen Seite des vorderen Körperabschnitts (61) bereitgestellt ist;
wobei das Kupplungsbetätigungsmittel (69) im vorderen Körperabschnitt (61) bereitgestellt ist;
wobei die äußere Kupplung (70) im hinteren Körperabschnitt (62) bereitgestellt und zum lösbaren Koppeln des Nummernschildhalters (8) ausgelegt ist;
- auf einer Rückseite des hinteren Körperabschnitts (62) eine reflektierende Platte (72) bereitgestellt ist; und
- auf der unteren Seite des vorderen Körperabschnitts (61) Räder (73) bereitgestellt sind;
und
- eine Abdeckung (9), die dazu ausgelegt ist, den Behälter (6) mindestens teilweise abzudecken.

11. Aufbewahrungs- und Transportsystem nach einem der Ansprüche 8 bis 10, das mindestens einen Behälter (6) umfasst, der an eine der unteren Verankerungsstützen (51A) gekoppelt ist, die in jeder der unteren Hilfsquerstangen (53) des Rahmens (4) der Stützstruktur (1) für einen Träger bereitgestellt sind; und an eine der oberen Verankerungsstützen (52A) gekoppelt ist, die in jeder der oberen Hilfsquerstangen (54) des Rahmens (4) der Stützstruktur (1) für einen Träger bereitgestellt sind, wobei der Behälter (6) Folgendes umfasst:
- einen im Wesentlichen kastenförmigen hohlen Körper (6`), der einen vorderen Körperabschnitt (61) und einen hinteren Körperabschnitt (62) umfasst, die mit einem Scharniergelenk (63) verbunden sind, wobei der vordere Körperabschnitt (61) und der hintere Körperabschnitt (62) dazu ausgelegt sind, in einer versiegelten oder leckdichten Weise aneinandergekoppelt zu sein;
- ein unteres Kopplungsmittel (67), das im hohlen Körper (6') bereitgestellt und dazu ausgelegt ist, lösbar an die untere Verankerungsstütze (51A) des Rahmens (4) der Stützstruktur (1) für einen Träger gekoppelt zu sein;
- ein Kupplungsmittel (68), das im hohlen Körper (6') bereitgestellt und dazu ausgelegt ist, lösbar an die obere Verankerungsstütze (52A) des Rahmens (4) der Stützstruktur (1) für einen Träger gekoppelt zu sein;
- ein Kupplungsbetätigungsmittel (69), das mit dem Kupplungsmittel (68) verbunden und zum Lösen des Kupplungsmittels (68) aus der oberen Verankerungsstütze (52A) ausgelegt ist;
- eine äußere Kupplung (70), die im hohlen Körper (6') bereitgestellt und zum lösbaren Koppeln eines Nummernschildhalters (8) ausgelegt ist;
wobei im hohlen Körper (6'),
das untere Kopplungsmittel (67) auf einer unteren Seite des vorderen Körperabschnitts (61) bereitgestellt ist, wobei das Kupplungsmittel (68) auf einer vorderen Seite des vorderen Körperabschnitts (61) bereitgestellt ist;
wobei das Kupplungsbetätigungsmittel (69) im vorderen Körperabschnitt (61) bereitgestellt ist;
wobei die äußere Kupplung (70) im hinteren Körperabschnitt (62) bereitgestellt und zum lösbaren Koppeln des Nummernschildhalters (8) ausgelegt ist;
- auf einer Rückseite des hinteren Körperabschnitts (62) eine reflektierende Platte (72) bereitgestellt ist; und
- auf der unteren Seite des vorderen Körperabschnitts (61) Räder (73) bereitgestellt sind;
und
- eine Abdeckung (9), die dazu ausgelegt ist, den Behälter (6) mindestens teilweise abzudecken.

## Revendications

1. Structure de support (1) pour un porte-charge destiné à être monté sur un crochet de remorque de type boule (2) d'un véhicule, le crochet de remorque de type boule (2) ayant au moins une portion sphérique (2A) et une portion d'arbre (2B), dans laquelle la portion sphérique (2A) est pourvue d'une région plane supérieure (21), d'une portion semi-sphérique supérieure (22), d'une portion semi-sphérique inférieure (23) et la portion d'arbre (2B) pourvue d'au moins une portion de transition (24) et d'un col de tige (25), avec la structure de support (1) comprenant :
- une base de support (3) pouvant être accouplée et fixée au crochet de remorque de type boule (2), pourvue d'un moyen de fixation (30) conçu pour attacher la base de support (3) dans une position fixe par rapport au crochet de remorque de type boule (2), et d'un moyen de guidage conçu pour guider le dépliage du cadre (4) entre la position de service et la position dépliée ;
- un cadre (4) pouvant être accouplé à la base de support (3) et déplié d'une position de service à une position dépliée et inversement ; et
- un moyen d'actionnement prévu dans le cadre et conçu pour permettre le dépliage du cadre de la position de service à la position dépliée ; dans laquelle le moyen de fixation (30) de la base de support (3) comprend :
- une cavité (31) conçue pour recevoir entièrement la portion semi-sphérique supérieure (22) de la portion sphérique (2A) et recevoir de manière lâche la portion d'arbre (2B) du crochet de remorque de type boule (2) ;
- un premier élément de compression (32) et un second élément de compression (33) pouvant être accouplés l'un à l'autre et pouvant être accouplés de manière coulissante à la base de support (3), conçus pour maintenir la portion semi-sphérique inférieure (23) et le col de portion d'arbre (25) du crochet de remorque de type boule (2), dans laquelle le premier élément de compression (32) comprend un premier corps de maintien (32B) conçu pour entrer en contact avec une partie de la portion sphérique (2A) du crochet de remorque de type boule (2), et le second élément de compression (33) comprend un second corps de maintien ( 33B) conçu pour entrer en contact avec une partie de la portion sphérique (2A) du crochet de remorque de type boule (2) ; et
- un élément de retenue (34) pouvant être accouplé à la base de support (3) et conçu pour entrer en contact et presser contre la région plane supérieure (21) de la portion sphérique du crochet de remorque de type boule (2) ;
**caractérisée par le fait que** le moyen de fixation (30) de la base de support (3) comprend en outre
- un premier boulon (32C) pouvant être accouplé au premier élément de compression (32) s'étendant de manière essentiellement orthogonale depuis le premier corps de maintien (32B), entrant dans le second corps de maintien (33B), dans laquelle un second élément de bouton (33A), qui est fonctionnellement relié et conçu pour tourner par rapport au second corps de maintien (33B), est conçu pour être accouplé par filetage audit premier boulon (32C) ; et
- un second boulon (33C) pouvant être accouplé au second élément de compression (33) s'étendant de manière essentiellement orthogonale à partir du second corps de maintien (33B), entrant dans le premier corps de maintien (32B), dans laquelle un premier élément de bouton (32A), qui est fonctionnellement relié et conçu pour tourner par rapport au premier corps de maintien (32B), est conçu pour être accouplé par filetage audit second boulon (33C).

2. Structure de support (1) selon la revendication 1, dans laquelle le cadre (4) comprend au moins :
- un élément vertical pouvant être accouplé à la base de support (3) et déplié entre la position de service et la position dépliée ;
- une traverse inférieure (51) accouplée à une première extrémité de l'élément vertical ;
- une traverse supérieure (52) accouplée à une seconde extrémité de l'élément vertical qui est opposée à la première extrémité ; et
- un moyen d'ancrage de charge supplémentaire (40) prévu dans l'élément vertical.

3. Structure de support (1) selon la revendication 1, dans laquelle le cadre (4) comprend au moins :
- un premier élément vertical (41) pouvant être accouplé de manière mobile à la base de support (3) entre la position de service et la position dépliée ;
- un second élément vertical (42) pouvant être accouplé de manière pivotante au premier élément vertical (41) et conçu pour se déplacer entre une position déployée et une position repliée par rapport au premier élément vertical (41), dans laquelle le premier élément vertical (41) et le second élément vertical (42) sont conçus pour s'emboîter au moins partiellement en position repliée ;
- un moyen de blocage (45) lié au premier élément vertical (41) et au second élément vertical (42) et conçu pour fixer le mouvement du second élément vertical (42) en position déployée et pour fixer le mouvement du second élément vertical (42) en position repliée ;
- une traverse inférieure (51) accouplée à une extrémité inférieure du premier élément vertical (41) ;
- une traverse supérieure (52) accouplée à une extrémité supérieure du second élément vertical (42) qui est opposée à l'extrémité inférieure du premier élément vertical (41) ; et
- un moyen d'ancrage de charge supplémentaire (40) prévu dans le premier élément vertical (41).

4. Structure de support selon l'une quelconque des revendications 2 ou 3, dans laquelle le cadre (4) comprend au moins :
- un support d'ancrage inférieur (51A) prévu dans la traverse inférieure (51) ; et
- un support d'ancrage supérieur (52A) prévu dans la traverse supérieure (52).

5. Structure de support selon l'une quelconque des revendications 2 à 4, dans laquelle le cadre (4) comprend :
- des traverses auxiliaires inférieures (53) pouvant être accouplées à chacune des extrémités de la traverse inférieure (51) et orientées orthogonalement par rapport à ladite traverse inférieure (51) ; et
- des traverses auxiliaires supérieures (54) pouvant être accouplées à chacune des extrémités de la traverse supérieure (52) et orientées orthogonalement par rapport à ladite traverse supérieure (52) ;
- des supports d'ancrage inférieurs (51A) prévus dans les traverses auxiliaires inférieures (53) ; et
- des supports d'ancrage supérieurs (52A) prévus dans les traverses supérieures (52).

6. Système de stockage et de transport prévu pour être monté sur un crochet de remorque de type boule d'un véhicule, **caractérisé en ce qu'**il comprend :
- une structure de support (1) pour un porte-charge selon la revendication 4 ; et
- au moins un conteneur (6) pouvant être accouplé au support d'ancrage inférieur (51A) prévu dans la traverse inférieure (51) et au support d'ancrage supérieur (52A) prévu dans la traverse supérieure (52) du cadre (4) de ladite structure de support (1) pour un porte-charge, le conteneur (6) comprenant :
un corps creux (6') essentiellement en forme de boîte, comprenant une portion de corps avant (61) et une portion de corps arrière (62) reliées par une articulation articulée (63), lesdites portion de corps avant (61) et portion de corps arrière (62) étant conçues pour être accouplées l'une à l'autre de manière scellée ou étanche aux fuites ;
- un moyen d'accouplement inférieur (67) prévu dans le corps creux (6') et conçu pour être accouplé de manière amovible au support d'ancrage inférieur (51A) du cadre (4) de la structure de support (1) pour un porte-charge ;
- un moyen d'attelage (68) prévu dans le corps creux (6') et conçu pour être accouplé de manière amovible au support d'ancrage supérieur (52A) du cadre (4) de la structure de support (1) pour un porte-charge ;
- un moyen d'actionnement d'attelage (69) relié au moyen d'attelage (68) et conçu pour libérer ledit moyen d'attelage (68) du support d'ancrage supérieur (52A) ;
- un accouplement externe (70) prévu dans le corps creux (6') et conçu pour accoupler de manière amovible un dispositif de maintien de plaque d'immatriculation (8) ;
dans lequel dans le corps creux (6'),
le moyen d'accouplement inférieur (67) est prévu sur une face inférieure de la portion de corps avant (61), dans lequel le moyen d'attelage (68) est prévu sur une face avant de la portion de corps avant (61) ;
le moyen d'actionnement d'attelage (69) étant prévu dans la portion de corps avant (61) ;
l'accouplement externe (70) étant prévu dans la portion de corps arrière (62) et conçu pour accoupler de manière amovible le dispositif de maintien de plaque d'immatriculation (8) ;
- une plaque réfléchissante (72) est prévue sur une face arrière de la portion de corps arrière (62) ; et
- des roues (73) sont prévues sur la face inférieure de la portion de corps avant (61) ;
et
- un couvercle (9) conçu pour recouvrir au moins partiellement le conteneur (6) ; et
- un dispositif de maintien de plaque d'immatriculation (8) accouplé au conteneur (6).

7. Système de stockage et de transport selon la revendication 6, comprenant deux conteneurs (6) accouplés individuellement respectivement aux supports d'ancrage inférieurs (51A) prévus dans chacune des traverses auxiliaires inférieures (53) du cadre (4) de la structure de support (1) pour un porte-charge ; et accouplés individuellement respectivement aux supports d'ancrage supérieurs (52A) prévus dans chacune des traverses auxiliaires supérieures (54) du cadre (4) de la structure de support (1) pour un porte-charge.

8. Système de stockage et de transport prévu pour être monté sur un crochet de remorque de type boule (2) d'un véhicule, **caractérisé en ce qu'**il comprend :
- une structure de support (1) pour un porte-charge selon les revendications 2 à 5 ;
- un porte-vélos (100) pouvant être accouplé au cadre (4) et à la base de support (3) de la structure de support (1), avec ledit porte-vélos (100) étant orienté vers l'arrière, le porte-vélos (100) comprenant :
- une base d'ancrage (101) pouvant être accouplée au moyen d'ancrage de charge supplémentaire du cadre (4) et à la base de support (3), avec la base d'ancrage (101) conçue pour pivoter par rapport audit cadre (4) ;
- un élément de traverse (101A) pouvant être accouplé à la base d'ancrage (101) ;
- un élément de bras (101B) accouplé de manière pivotante à la base d'ancrage (101) ;
- un élément de support principal (110) pouvant être accouplé à la base d'ancrage (101) et qui fait saillie orthogonalement au cadre (4) ;
- au moins un élément de traverse (111A) pouvant être accouplé à l'élément de support principal (110), conçu pour recevoir les roues d'un vélo ;
- au moins un élément de bras (111B) pouvant être accouplé de manière pivotante à l'élément de support principal (110), lié fonctionnellement à l'élément de traverse (111A) et conçu pour accoupler le cadre de vélo ;
- au moins un élément d'attelage (130) pouvant être relié de manière mobile à l'élément de bras (111B) et conçu pour attacher au moins une portion d'un cadre de vélo audit élément de bras (111B) ;
- un support de dispositif de maintien de plaque d'immatriculation (150) pouvant être accouplé à l'élément de support principal (110) au niveau d'une extrémité opposée au cadre (4) ; et
- un second support de dispositif de maintien de plaque d'immatriculation pouvant être accouplé à la base d'ancrage (101) ; dans lequel l'élément de support principal (110) est un élément télescopique qui peut en même temps être relié de manière télescopique à la base d'ancrage (101) ;
et
- un dispositif de maintien de plaque d'immatriculation (8) accouplé au support de dispositif de maintien de plaque d'immatriculation (150) de l'élément de support principal (100) du porte-vélos (100).

9. Système de stockage et de transport selon la revendication 8, comprenant un porte-skis (200) pouvant être accouplé au cadre (4) de la structure de support (1) pour un porte-charge, le porte-skis (200) comprenant :
- une structure de support (201) pouvant être accouplée au moyen d'ancrage de charge supplémentaire (40) du cadre (4) ;
- au moins deux supports pivotants (205) (206) pouvant être accouplés à la structure de support (201) conçus pour maintenir des skis ou des planches à neige ;
- un moyen de blocage conçu pour bloquer les supports pivotants (205) (206) entre une position déployée et une position repliée ;
- au moins un élément de serrage (207) (208) prévu dans chaque support pivotant (205) (206) conçu pour maintenir des skis ou des planches à neige ; et
- un élément de fermeture (209) (210) prévu dans l'élément de serrage (207) (208) conçu pour maintenir ledit élément de serrage (207) (208) fermé.

10. Système de stockage et de transport selon les revendications 8 ou 9, comprenant au moins un conteneur (6) pouvant être accouplé au support d'ancrage inférieur (51A) prévu dans la traverse inférieure (51) et au support d'ancrage supérieur (52A) prévu dans la traverse supérieure (52) du cadre (4) de ladite structure de support (1) pour un porte-charge, le conteneur (6) comprenant :
- un corps creux (6') essentiellement en forme de boîte, comprenant une portion de corps avant (61) et une portion de corps arrière (62) reliées par une articulation articulée (63), lesdites portion de corps avant (61) et portion de corps arrière (62) étant conçues pour être accouplées l'une à l'autre de manière scellée ou étanche aux fuites ;
- un moyen d'accouplement inférieur (67) prévu dans le corps creux (6') et conçu pour être accouplé de manière amovible au support d'ancrage inférieur (51A) du cadre (4) de la structure de support (1) pour un porte-charge ;
- un moyen d'attelage (68) prévu dans le corps creux (6') et conçu pour être accouplé de manière amovible au support d'ancrage supérieur (52A) du cadre (4) de la structure de support (1) pour un porte-charge ;
- un moyen d'actionnement d'attelage (69) relié au moyen d'attelage (68) et conçu pour libérer ledit moyen d'attelage (68) du support d'ancrage supérieur (52A) ;
- un accouplement externe (70) prévu dans le corps creux (6') et conçu pour accoupler de manière amovible un dispositif de maintien de plaque d'immatriculation (8) ;
dans lequel dans le corps creux (6'),
le moyen d'accouplement inférieur (67) est prévu sur une face inférieure de la portion de corps avant (61), dans lequel le moyen d'attelage (68) est prévu sur une face avant de la portion de corps avant (61) ;
le moyen d'actionnement d'attelage (69) étant prévu dans la portion de corps avant (61) ;
l'accouplement externe (70) étant prévu dans la portion de corps arrière (62) et conçu pour accoupler de manière amovible le dispositif de maintien de plaque d'immatriculation (8) ;
- une plaque réfléchissante (72) est prévue sur une face arrière de la portion de corps arrière (62) ; et
- des roues (73) sont prévues sur la face inférieure de la portion de corps avant (61) ;
et
- un couvercle (9) conçu pour recouvrir au moins partiellement le conteneur (6).

11. Système de stockage et de transport selon l'une quelconque des revendications 8 à 10, comprenant au moins un conteneur (6) accouplé à l'un des supports d'ancrage inférieurs (51A) prévus dans chacune des traverses auxiliaires inférieures (53) du cadre (4) de la structure de support (1) pour un porte-charge ; et accouplé à l'un des supports d'ancrage supérieurs (52A) prévus dans chacune des traverses auxiliaires supérieures (54) du cadre (4) de la structure de support (1) pour un porte-charge, le conteneur (6) comprenant :
- un corps creux (6') essentiellement en forme de boîte, comprenant une portion de corps avant (61) et une portion de corps arrière (62) reliées par une articulation articulée (63), lesdites portion de corps avant (61) et portion de corps arrière (62) étant conçues pour être accouplées l'une à l'autre de manière scellée ou étanche aux fuites ;
- un moyen d'accouplement inférieur (67) prévu dans le corps creux (6') et conçu pour être accouplé de manière amovible au support d'ancrage inférieur (51A) du cadre (4) de la structure de support (1) pour un porte-charge ;
- un moyen d'attelage (68) prévu dans le corps creux (6') et conçu pour être accouplé de manière amovible au support d'ancrage supérieur (52A) du cadre (4) de la structure de support (1) pour un porte-charge ;
- un moyen d'actionnement d'attelage (69) relié au moyen d'attelage (68) et conçu pour libérer ledit moyen d'attelage (68) du support d'ancrage supérieur (52A) ;
- un accouplement externe (70) prévu dans le corps creux (6') et conçu pour accoupler de manière amovible un dispositif de maintien de plaque d'immatriculation (8) ;
dans lequel dans le corps creux (6'),
le moyen d'accouplement inférieur (67) est prévu sur une face inférieure de la portion de corps avant (61), dans lequel le moyen d'attelage (68) est prévu sur une face avant de la portion de corps avant (61) ;
le moyen d'actionnement d'attelage (69) étant prévu dans la portion de corps avant (61) ;
l'accouplement externe (70) étant prévu dans la portion de corps arrière (62) et conçu pour accoupler de manière amovible le dispositif de maintien de plaque d'immatriculation (8) ;
- une plaque réfléchissante (72) est prévue sur une face arrière de la portion de corps arrière (62) ; et
- des roues (73) sont prévues sur la face inférieure de la portion de corps avant (61) ;
et
- un couvercle (9) conçu pour recouvrir au moins partiellement le conteneur (6).
